# EUROPEAN PATENT APPLICATION

(11) **EP 4 749 383 A1**
(43) Date of publication of application: **27.05.2026**
(21) Application number: 25212693.3
(22) Date of filing: 31.10.2025
(51) Int. Cl.: G05B 19/4093

(54) **MACHINE TOOL AND METHOD FOR CONTROLLING OF A MACHINE TOOL**

(30) Priority: 22.11.2024 JP 2024204014
(71) Applicant: Star Micronics Co., Ltd., Shizuoka-shi, Shizuoka 422-8654 (JP)
(72) Inventor: MATSUDA, Takumi, Shizuoka-shi, Shizuoka (JP)
(74) Representative: Grünecker Patent- und Rechtsanwälte PartG mbB

(57) **Abstract**

Provided is a machine tool that can be made inexpensive and compact, and a method for controlling the machine tool.

A machine tool includes: a tool spindle to which a long tool having a length that is at least a predetermined length, and a normal tool shorter than the predetermined length, can be interchangeably attached; a tool storage device capable of storing both the long tool and the normal tool; a tool exchange device having a first tool gripping unit and a second tool gripping unit, the tool exchange device configured to exchange the long tool or the normal tool stored in the tool storage device with an attached tool attached to the tool spindle; and an exchange operation control unit configured to determine an operation pattern to be used in a tool exchange operation performed using the tool exchange device, on the basis of whether the attached tool is the long tool or the normal tool and whether a next attached tool to be attached to the tool spindle next is the long tool or the normal tool.

## Description

### CROSS-REFERENCES

The application claims priority of Japanese Patent Application No. 2024-204014 filed on November 22, 2024. The contents of this application are incorporated herein by reference in their entirety.

### BACKGROUND OF THE INVENTION

### 1. Field of the Invention

The present invention relates to a machine tool equipped with a tool exchange device and a method for controlling a machine tool equipped with a tool exchange device.

### 2. Description of the Related Art

A machine tool equipped with a tool exchange device is known in which a tool stored in a tool storage device is removed and exchanged with a tool attached to a spindle (see, for example, Japanese Patent Application Publication No. 2015-182139). A tool magazine storing tools of normal lengths and a long tool storage device storing long tools that are longer than the tools of normal lengths are provided in the machine tool described in Japanese Patent Application Publication No. 2015-182139. Japanese Patent Application Publication No. 2015-182139 proposes omitting a drive mechanism only for the removal and attachment of long tools on the spindle by using a tool exchange device that removes and attaches tools of a normal length to also remove and attach long tools to the spindle.

### SUMMARY OF THE INVENTION

However, the machine tool described in Japanese Patent Application Publication No. 2015-182139 has a problem in that a mobile platform capable of lifting and lowering the long tool storage device and a slide table capable of sliding in an axis direction are both provided, with the machine tool being configured to transfer the long tools to the tool exchange device by moving the long tools using the mobile platform and the slide table, which makes the machine tool expensive. There is a further problem in that space for installing the long tool storage device, as well as space for the mobile platform and the slide table to move, are required, which increases the size of the machine tool.

Having been conceived in light of the foregoing problems, an object of the present invention is to provide a machine tool that can be made inexpensive and compact, as well as a method for controlling such a machine tool.

To address the above-described issue, a machine tool according to the present invention includes:
a tool spindle to which a long tool having a length that is at least a predetermined length, and
a normal tool shorter than the predetermined length, can be interchangeably attached;
a tool storage device capable of storing both the long tool and the normal tool;
a tool exchange device having a first tool gripping unit and a second tool gripping unit, the tool exchange device configured to exchange the long tool or the normal tool stored in the tool storage device with an attached tool attached to the tool spindle; and
an exchange operation control unit configured to determine an operation pattern to be used in a tool exchange operation performed using the tool exchange device, on the basis of whether the attached tool is the long tool or the normal tool and whether a next attached tool to be attached to the tool spindle next is the long tool or the normal tool.

This machine tool includes the tool storage device capable of storing both the long tool and the normal tool, and the exchange operation control unit configured to determine the operation pattern to be used in the tool exchange operation. Accordingly, the machine tool can perform the tool exchange operation with a compact and inexpensive configuration.

Here, the machine tool may include a tool information storage unit that stores information for distinguishing whether a tool stored in the tool storage device and the attached tool are the long tool or the normal tool.
The exchange operation control unit may control the machine tool to perform the tool exchange operation according to the determined operation pattern. While gripping the next attached tool using one of the first tool gripping unit or the second tool gripping unit, the tool exchange device may grip the attached tool using the other of the first tool gripping unit or the second tool gripping unit. It should be noted that the tool exchange operation is an operation for exchanging the long tool or the normal tool stored in the tool storage device with the attached tool.

**In** this machine tool,
the tool exchange device may include an arm rotation shaft configured to rotate reciprocally in a predetermined angular range,
the first tool gripping unit may be formed projecting from the arm rotation shaft in a radial direction of the arm rotation shaft, and may be configured to move within a range in which even if the arm rotation shaft is rotated reciprocally while the normal tool is gripped, the normal tool gripped does not interfere with the tool exchange device, but when the arm rotation shaft is rotated while the long tool is gripped, the long tool gripped interferes with the tool exchange device, and
the second tool gripping unit may be formed at a distance from the first tool gripping unit in a circumferential direction, projecting from the arm rotation shaft in a radial direction of the arm rotation shaft, and may be configured to move within a range in which even if the arm rotation shaft is rotated reciprocally while the normal tool or the long tool is gripped, neither the normal tool gripped nor the long tool gripped interferes with the tool exchange device.

The second tool gripping unit moves within a range in which interference does not occur regardless of whether the normal tool or the long tool is gripped, and it is therefore easy to set an operation pattern in which interference is avoided.

Here, the tool exchange device may include an arm support portion that supports the arm rotation shaft, the first tool gripping unit may be configured to move within a range in which when the arm rotation shaft is rotated while the long tool is gripped, the long tool gripped interferes with the arm support portion, and the second tool gripping unit may be configured to move within a range in which even if the arm rotation shaft is rotated reciprocally while the normal tool or the long tool is gripped, neither the normal tool gripped nor the long tool gripped interferes with the arm support portion.

In this machine tool,
when one of the attached tool or the next attached tool is the long tool and the other of the attached tool or the next attached tool is the normal tool, the exchange operation control unit may be configured to control the normal tool to be gripped by the first tool gripping unit, and to control the long tool to be gripped by the second tool gripping unit.

The long tool is gripped by the second tool gripping unit, and thus situations where the long tool interferes with the tool exchange device can be avoided.

In this machine tool,
when the next attached tool and the attached tool are both the long tool, the exchange operation control unit may be configured to control the second tool gripping unit to grip the attached tool and remove the attached tool from the tool spindle, and then control the first tool gripping unit to grip the next attached tool, remove the next attached tool from the tool storage device, and attach the next attached tool to the tool spindle before the second tool gripping unit stores the attached tool removed in the tool storage device.

This makes it possible to exchange the tools quickly while avoiding interference.

Here, the exchange operation control unit may be configured to control the attached tool to be stored in the tool storage device after the next attached tool is attached to the tool spindle.

To address the above-described issue, a method for controlling a machine tool according to the present invention is
a method for controlling a machine tool including a tool spindle to which a long tool having a length that is at least a predetermined length and a normal tool shorter than the predetermined length can be interchangeably attached, a tool storage device capable of storing both the long tool and the normal tool, and a tool exchange device configured to exchange the long tool or the normal tool stored in the tool storage device with an attached tool attached to the tool spindle, the method including:
a step of obtaining information as to whether the attached tool is the long tool or the normal tool and information as to whether a next attached tool to be attached to the tool spindle next is the long tool or the normal tool; and
a step of determining an operation pattern to be used in a tool exchange operation performed using the tool exchange device, on the basis of the information obtained in the step of obtaining information.

According to this method for controlling a machine tool, the machine tool includes the tool storage device capable of storing both the long tool and the normal tool, and the operation pattern to be used in the tool exchange operation is determined in the determining. Accordingly, the machine tool can perform the tool exchange operation with a compact and inexpensive configuration.

According to the present invention, a machine tool that can be made inexpensive and compact, as well as a method for controlling such a machine tool, can be provided.

### BRIEF DESCRIPTION OF THE DRAWINGS

FIG. 1 is a perspective view illustrating the main internal configuration of a machine tool according to an embodiment;
FIGS. 2A and 2B are perspective views illustrating a tool exchange device illustrated in FIG. 1 when gripping a normal tool;
FIGS. 3A and 3B are perspective views similar to FIGS. 2A and 2B, illustrating the tool exchange device illustrated in FIG. 1 when gripping a long tool;
FIG. 4 is a control block diagram of the machine tool illustrated in FIG. 1;
FIG. 5 is a flowchart illustrating steps S10 to S18 in a tool exchange operation;
FIG. 6 is a flowchart illustrating steps S19 to S27 in a tool exchange operation;
FIG. 7 is a flowchart illustrating steps S31 to S38 in a tool exchange operation;
FIG. 8 is a flowchart illustrating steps S39 to S45 in a tool exchange operation;
FIG. 9 is a flowchart illustrating steps S51 to S58 in a tool exchange operation;
FIG. 10 is a flowchart illustrating steps S59 to S65 in a tool exchange operation;
FIGS. 11A and 11B are diagrams illustrating a state in which step S13 is complete;
FIGS. 12A and 12B are diagrams illustrating a state in which step S15 is complete;
FIGS. 13A and 13B are diagrams illustrating a state in which step S18 is complete;
FIGS. 14A and 14B are diagrams illustrating a state in which step S21 is complete;
FIGS. 15A and 15B are diagrams illustrating a state in which step S26 is complete;
FIGS. 16A and 16B are diagrams illustrating a state in which step S27 is complete;
FIGS. 17A and 17B are diagrams illustrating a state in which step S31 is complete;
FIGS. 18A and 18B are diagrams illustrating a state in which step S32 is complete;
FIGS. 19A and 19B are diagrams illustrating a state in which step S35 is complete;
FIGS. 20A and 20B are diagrams illustrating a state in which step S37 is complete;
FIGS. 21A and 21B are diagrams illustrating a state in which step S39 is complete;
FIGS. 22A and 22B are diagrams illustrating a state in which step S42 is complete;
FIGS. 23A and 23B are diagrams illustrating a state in which step S44 is complete;
FIGS. 24A and 24B are diagrams illustrating a state in which step S45 is complete;
FIG. 25A and 25B are diagrams illustrating a state in which step S51 is complete;
FIGS. 26A and 26B are diagrams illustrating a state in which step S52 is complete;
FIGS. 27A and 27B are diagrams illustrating a state in which step S55 is complete;
FIGS. 28A and 28B are diagrams illustrating a state in which step S57 is complete;
FIGS. 29A and 29B are diagrams illustrating a state in which step S59 is complete;
FIGS. 30A and 30B are diagrams illustrating a state in which step S62 is complete;
FIGS. 31A and 31B are diagrams illustrating a state in which step S64 is complete;
FIGS. 32A and 32B are diagrams illustrating a state in which step S65 is complete;
FIG. 33 is a perspective view illustrating a tool storage device according to Variation 1;
FIG. 34 is a perspective view illustrating the removal of a tool pot (registered trademark) from the tool magazine illustrated in FIG. 33;
FIGS. 35A to 35C are cross-sectional views illustrating a state in which a long tool is stored in the first-stage tool magazine in a machine tool equipped with the tool storage device illustrated in FIG. 33;
FIG. 36 is a perspective view illustrating a tool storage device according to Variation 2;
FIG. 37 is a right side view of the tool storage device illustrated in FIG. 36; and
FIGS. 38A and 38B are cross-sectional views illustrating a state in which a long tool is stored in the first-stage tool magazine in a machine tool equipped with the tool storage device illustrated in FIG. 36.

### DESCRIPTION OF THE PREFERRED EMBODIMENTS

An embodiment of the present invention will be described below with reference to the drawings.

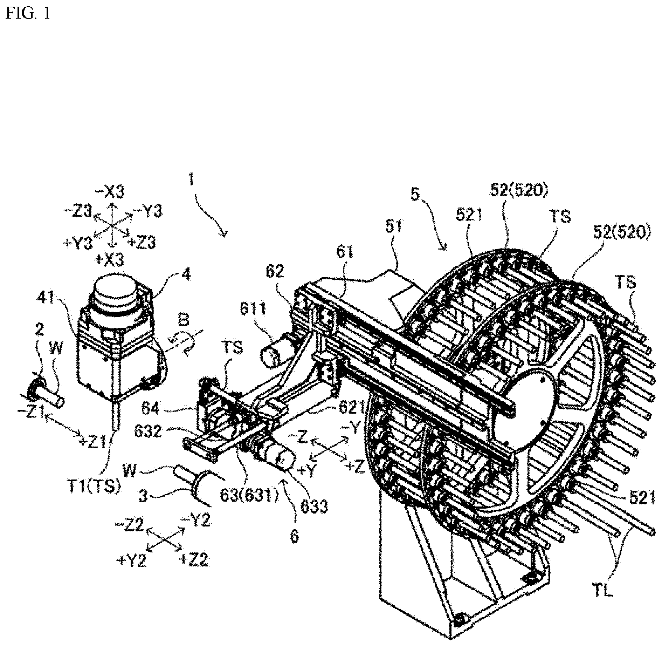

FIG. 1 is a perspective view illustrating the main internal configuration of a machine tool 1 according to the present embodiment.

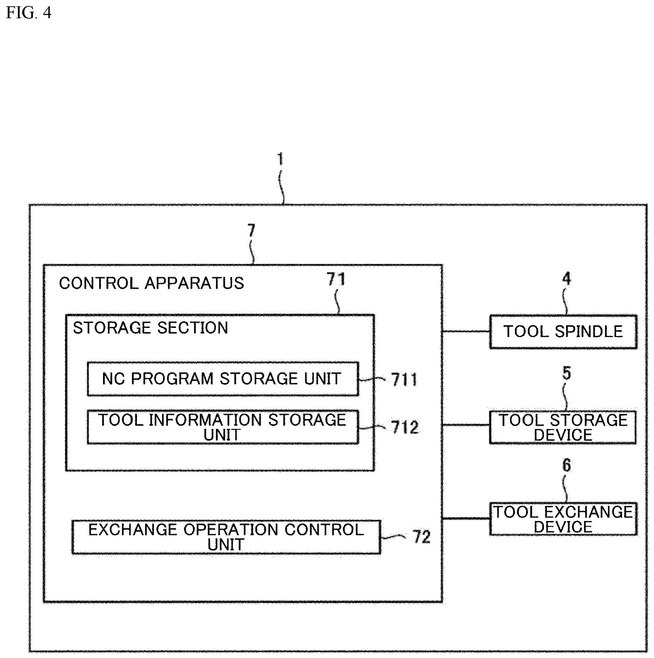

As illustrated in FIG. 1, the machine tool 1 is a Numerical Control (NC) lathe equipped with a spindle 2, an opposite spindle 3, a tool spindle 4, a tool storage device 5, a tool exchange device 6, and a control apparatus 7 (see FIG. 4). The operations of the spindle 2, the opposite spindle 3, the tool spindle 4, the tool storage device 5, and the tool exchange device 6 are controlled by the control apparatus 7. The control apparatus 7 is a computer that operates the machine tool 1 according to operations performed using an NC program, an operating part (not shown), or the like.

The spindle 2 releasably grips an elongated rod-shaped workpiece W inserted into the interior thereof. The spindle 2 moves in a Z1-axis direction along with a gripped workpiece W. The Z1-axis direction is a horizontal direction, and is a direction linking the upper-left to the lower-right in FIG. 1. The axis directions of the spindle 2 and the workpiece W match, and both are the Z1-axis direction. The spindle 2 rotates the axis of the spindle 2 as a rotation center by driving a spindle motor (not shown) such as a built-in motor. As a result, the workpiece W gripped by the spindle 2 rotates the axis of the workpiece W as the rotation center.

The opposite spindle 3 releasably grips the workpiece W, which has been cut by a cutout process and transferred from the spindle 2. The opposite spindle 3 moves in a Z2-axis direction and a Y2-axis direction together with the gripped workpiece W. The Z2-axis direction is the same direction as the Z1-axis direction described above. The Y2-axis direction is a horizontal direction that is orthogonal to the Z2-axis direction. The axis direction of the opposite spindle 3 matches the axis direction of the spindle 2 and also matches the axis direction of the workpiece W gripped by the opposite spindle 3. The opposite spindle 3 rotates the axis of the opposite spindle 3 as a rotation center by driving a spindle motor (not shown) such as a built-in motor. As a result, the workpiece W gripped by the opposite spindle 3 rotates the axis of the workpiece W as the rotation center.

The tool spindle 4 moves in an X3-axis direction, a Y3-axis direction, and a Z3-axis direction. The tool spindle 4 furthermore swivels about a B-axis with the Y3-axis direction as the swiveling center. The X3-axis direction is a vertical direction.
The Y3-axis direction is the same direction as the Y2-axis direction described above. Additionally, the Z3-axis direction is the same direction as the Z1-axis direction and the Z2-axis direction described above. Hereinafter, movement by the tool spindle 4 along the Y3-axis direction toward the lower-left in FIG. 1 may be referred to as +Y3 movement, and movement by the tool spindle 4 along the Y3-axis direction toward the upper-right in FIG. 1 may be referred to as -Y3 movement. Additionally, movement by the tool spindle 4 along the Z3-axis direction toward the lower-right in FIG. 1 may be referred to as +Z3 movement, and movement by the tool spindle 4 along the Z3-axis direction toward the upper-left in FIG. 1 may be referred to as -Z3 movement. Movement by the tool spindle 4 in the X3-axis direction, the Y3-axis direction, and the Z3-axis direction, as well as swiveling about the B-axis, are performed by a servo motor (not shown).

Tools such as a drill or an endmill for processing the workpiece W are interchangeably attached to the tool spindle 4. The tool attached to the tool spindle 4 may be referred to as an "attached tool T1" hereinafter. Tools which can be attached to the tool spindle 4 include a long tool TL having at least a predetermined length and a normal tool TS having a shorter length than the predetermined length. The normal tool TS is a tool used for general processing. The long tool TL is a tool used for special processing, such as a gun drill. FIG. 1 illustrates a state in which the normal tool TS is attached to the tool spindle 4. When it is not necessary to distinguish the normal tool TS from the long tool TL, the tools may simply be referred to as "tools" hereinafter. The tool spindle 4 includes a tool spindle motor 41 that rotates the attached tool T1. Driving the tool spindle motor 41 rotates the attached tool T1. Regardless of the workpiece W gripped by either the spindle 2 or the opposite spindle 3, the tool spindle 4 can be processed by the attached tool T1 by moving in each axis direction, swiveling about the B-axis, and the like.

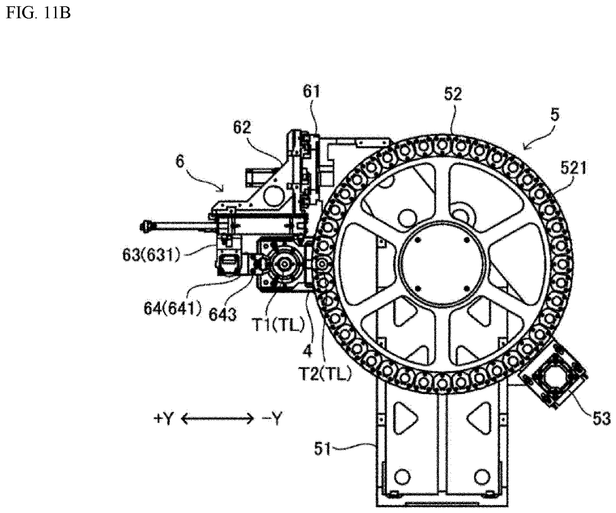

The tool storage device 5 includes a support 51 and two tool magazines 52. The support 51 is fixed to the body of the machine tool 1. The tool magazine 52 is rotatably supported by the support 51. Each tool magazine 52 includes a magazine body 520 and tool pots 521. The magazine body 520 is made of metal, with six spokes connecting a hub in a center portion with an annular portion constituting an outer periphery, and is wheel-shaped. A plurality of the tool pots 521 are arranged side-by-side in the circumferential direction along the annular portion of the magazine body 520. One each of the normal tool TS or the long tool TL to be attached to the tool spindle 4 is stored in a corresponding tool pot 521. The two tool magazines rotate a center axis as a rotation center by driving a magazine motor 53 (see FIG. 11B). FIG. 1 illustrates the tool storage device 5 provided with two tool magazines 52, namely a first-stage tool magazine 52 disposed on the side of the support 51 and a second-stage tool magazine 52 disposed distanced from the support 51. These two tool magazines 52 are aligned with each other's center axis and connected by screws. In the tool magazine 52, the tools are stored in an attitude where the shank of the tool is located on the side of the support 51 and the tip is located on the side opposite from the support 51. Accordingly, the second-stage tool magazine 52 is disposed on the tip side of the tools stored in the first-stage tool magazine 52. Of the two tool magazines 52, the normal tools TS can be stored in the first-stage tool magazine 52, and both normal tools TS and long tools TL can be stored in the second-stage tool magazine 52. Note that the long tools TL may be made storable in the first-stage tool magazine 52 by increasing the distance between the first-stage tool magazine 52 and the second-stage tool magazine 52.

The reason why the long tools TL cannot be stored in the first-stage tool magazine 52 in the machine tool 1 according to this embodiment is that if an attempt is made to store the long tools TL in the first-stage tool magazine 52, the annular portion of the second-stage tool magazine 52 and the long tools TL will interfere with each other. Note that if the first-stage tool magazine 52 is sufficient for storing the number of tools T, the second-stage tool magazine 52 may be omitted. In this case, both normal tools TS and long tools TL can be stored in the first-stage tool magazine 52.

The tool exchange device 6 is a device that exchanges a tool stored in the tool storage device 5 with the attached tool T1 attached to the tool spindle 4. The tool exchange device 6 includes a first movement mechanism 61, a second movement mechanism 62, an arm support portion 63, and a tool exchange arm 64. The first movement mechanism 61 includes a Z-axis motor 611 for moving the second movement mechanism 62, the arm support portion 63, and the tool exchange arm 64 in the Z-axis direction. The Z-axis direction is the same direction as the Z1-axis direction, the Z2-axis direction, and the Z3-axis direction, described above. Hereinafter, movement of the tool exchange arm 64 along the Z-axis direction toward the lower-right in FIG. 1 may be referred to as +Z movement, and movement of the tool exchange arm 64 along the Z-axis direction toward the upper-left in FIG. 1 may be referred to as -Z movement.

The second movement mechanism 62 includes a drive cylinder 621 for moving the arm support portion 63 and the tool exchange arm 64 in the Y-axis direction. The Y-axis direction is the same as the Y2-axis direction and the Y3-axis direction described above. Hereinafter, movement of the tool exchange arm 64 along the Y-axis direction toward the lower-left in FIG. 1 may be referred to as +Y movement, and movement of the tool exchange arm 64 along the Y-axis direction toward the upper-right in FIG. 1 may be referred to as -Y movement.

The arm support portion 63 rotatably supports the tool exchange arm 64. The arm support portion 63 includes a Y-axis mobile platform 631, an arm cylinder 632, and an arm motor 633. The Y-axis mobile platform 631 is a member which is connected to the drive cylinder 621 and which moves in the Y-axis direction under drive force of the drive cylinder 621. The arm cylinder 632 is a cylinder fixed to the lower end of the Y-axis mobile platform 631. The arm motor 633 is a motor for reciprocally rotating the tool exchange arm 64 within a predetermined angular range. By driving the arm motor 633, the tool exchange arm 64 rotates with an arm center axis extending in the Z-axis direction as the rotation center.

The tool exchange arm 64 moves in the Z-axis direction and the Y-axis direction by gripping the attached tool T1 attached to the tool spindle 4, tools stored in the tool storage device 5, and the like. The tools stored in the tool storage device 5 are examples of a "stored tool". FIG. 1 illustrates a state in which the tool exchange arm 64 grips the normal tool TS and stands by in an exchange position to exchange the tool with the tool spindle 4.

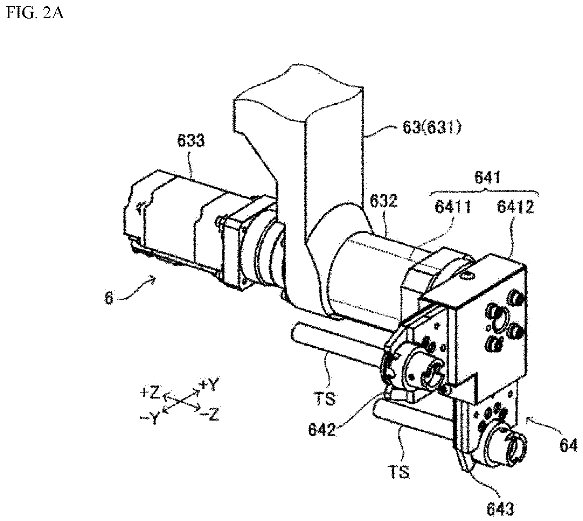

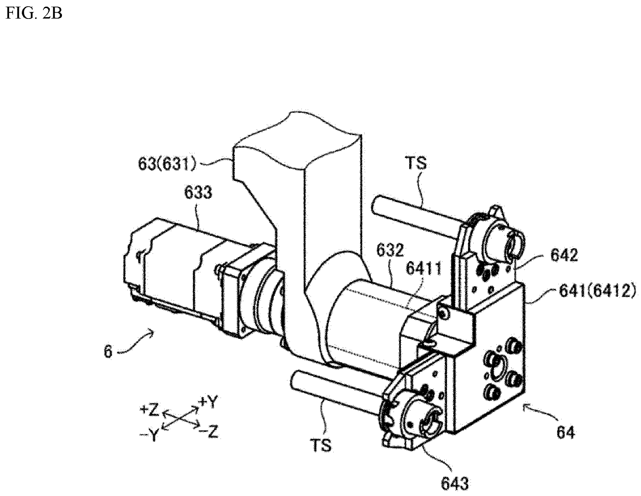

FIGS. 2A and 2B are perspective views illustrating the tool exchange device 6 illustrated in FIG. 1 when gripping the normal tool TS. FIGS. 2A and 2B illustrate a lower part of the arm support portion 63 and the tool exchange arm 64.

As illustrated in FIGS. 2A and 2B, the tool exchange arm 64 includes an arm rotation shaft 641, a first tool gripping unit 642, and a second tool gripping unit 643. FIGS. 2A and 2B illustrate a state in which the first tool gripping unit 642 and the second tool gripping unit 643 each grip a normal tool TS. The arm rotation shaft 641 is constituted by a shaft portion 6411 and a gripping base portion 6412. The shaft portion 6411 is formed in a column shape with the axial direction thereof matching the Z-axis direction. The shaft portion 6411 is rotatably held by the arm cylinder 632 within the arm cylinder 632. One end of the shaft portion 6411 is connected to an output shaft of the arm motor 633. The gripping base portion 6412 is fixed to the other end of the shaft portion 6411.

A base part of the first tool gripping unit 642 is fixed to the gripping base portion 6412, and the first tool gripping unit 642 projects from the gripping base portion 6412 in a radial direction of the arm rotation shaft 641. A pair of gripping claws for gripping the tool are provided at the projecting end portion of the first tool gripping unit 642. The pair of gripping claws are capable of displacing in a direction that brings the projecting ends together and separates the projecting ends from each other. The pair of gripping claws are biased by a spring (not shown) in a direction in which the projecting ends thereof approach each other so that when no external force is applied, the projecting ends of the pair of gripping claws are kept with a predetermined interval therebetween.

The second tool gripping unit 643 projects from the gripping base portion 6412 in the radial direction of the arm rotation shaft 641 at a position rotated 90 degrees about the axis direction of the arm rotation shaft 641 relative to the first tool gripping unit 642. Note that the first tool gripping unit 642 and the second tool gripping unit 643 are disposed at the same position in the Z-axis direction. Aside from the projecting direction being different, the second tool gripping unit 643 has the same configuration as the first tool gripping unit 642, and a pair of gripping claws for gripping tools are provided at the projecting end portion thereof. The rotation angle of the arm rotation shaft 641 when exchanging the attached tool T1 attached to the tool spindle 4 with a tool removed from the tool storage device 5 is equal to the difference in angles of the projecting direction of the first tool gripping unit 642 and the projecting direction of the second tool gripping unit 643, and is the angle at which the tool exchange arm 64 reciprocally rotates. Note that the difference in angles of the circumferential direction of the first tool gripping unit 642 and the second tool gripping unit 643 may be 90 degrees or more, or 90 degrees or less.

FIG. 2Aillustrates a first attitude in which the first tool gripping unit 642 projects in the -Y direction, and the second tool gripping unit 643 projects downward. "Downward" is the same direction as the +X3 direction of the tool spindle 4, and can be said to be the +X direction in the tool exchange device 6. Additionally, FIG. 2B illustrates a second attitude in which the tool exchange arm 64 is rotated 90 degrees clockwise when viewed in the +Z direction, from the state illustrated in FIG. 2A. In this second attitude, the first tool gripping unit 642 projects upward, and the second tool gripping unit 643 projects in the -Y direction. "Upward" is the same direction as the -X3 direction of the tool spindle 4, and can be said to be the -X direction in the tool exchange device 6. The tool exchange arm 64 reciprocally rotates between the first attitude illustrated in FIG. 2A and the second attitude illustrated in FIG. 2B. The angular range between the first attitude and the second attitude corresponds to an example of a "predetermined angular range". Although the present embodiment describes an example in which the angular range is 90 degrees, the angular range is appropriately set in correspondence with the angle of the projecting direction of the first tool gripping unit 642 and the projecting direction of the second tool gripping unit 643. As illustrated in FIGS. 2A and 2B, even if the first tool gripping unit 642 and the second tool gripping unit 643 each grip a normal tool TS and the tool exchange arm 64 rotates to change attitude between the first attitude and the second attitude, the normal tool TS does not interfere with the tool exchange device 6.

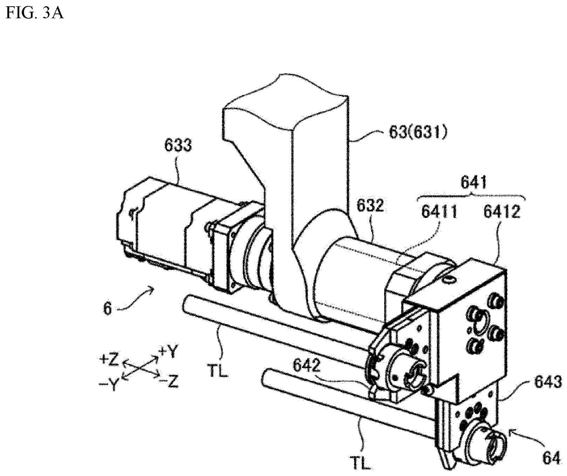

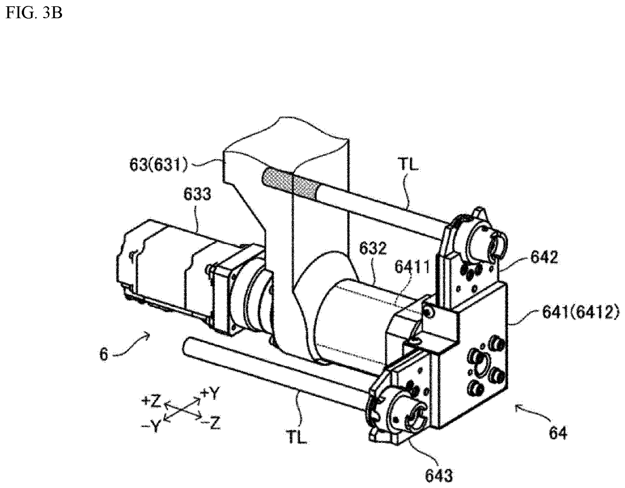

FIGS. 3A and 3B are perspective views similar to FIGS. 2A and 2B, illustrating the tool exchange device 6 illustrated in FIG. 1 when gripping a long tool TL.

FIG. 3A illustrates a state in which the first tool gripping unit 642 and the second tool gripping unit 643 each grip a long tool TL in the first attitude. As illustrated in FIG. 3A, in the first attitude, even if the first tool gripping unit 642 and the second tool gripping unit 643 each grip a long tool TL, the long tool TL and the tool exchange device 6 do not interfere with each other. However, as illustrated in FIG. 3B, in the second attitude, if the first tool gripping unit 642 and the second tool gripping unit 643 each grip a long tool TL, the long tool TL gripped by the first tool gripping unit 642 will interfere with the tool exchange device 6 (the arm support portion 63). FIG. 3B indicates the interfering part with cross-hatching. In reality, when the attitude changes from the first attitude to the second attitude, the long tool TL gripped by the first tool gripping unit 642 interferes with the arm support portion 63 during the movement of the first tool gripping unit 642. In other words, the first tool gripping unit 642 moves in a range in which even if a normal tool TS is gripped and the arm rotation shaft 641 rotates reciprocally within the predetermined angular range, the normal tool TS that is gripped will not interfere with the arm support portion 63, but if a long tool TL is gripped and the arm rotation shaft 641 rotates reciprocally, the long tool TL that is gripped will interfere with the arm support portion 63. On the other hand, the second tool gripping unit 643 moves in a range in which regardless of whether a normal tool TS or a long tool TL is gripped, when the arm rotation shaft 641 rotates reciprocally within the predetermined angular range, neither the normal tool TS nor the long tool TL will interfere with the arm support portion 63.

FIG. 4 is a control block diagram of the machine tool 1 illustrated in FIG. 1. Although FIG. 4 illustrates only parts of the control configuration that are particularly relevant to the present embodiment, the control apparatus 7 also controls other components of the machine tool 1 not illustrated in FIG. 4.

As illustrated in FIG. 4, the control apparatus 7 includes a storage section 71 and an exchange operation control unit 72. The storage section 71 includes an NC program storage unit 711 and a tool information storage unit 712. This storage section 71 is constituted by nonvolatile memory and volatile memory. The NC program storage unit 711 stores an NC program created by an operator of the machine tool 1. The control apparatus 7 controls various actuators and the like of the machine tool 1 according to the NC program.

The tool information storage unit 712 stores tool information such as tool types, tool lengths, and the like for all tools stored in the tool storage device 5, the attached tool T1, and the like. One of these items of tool information is information to distinguish between normal tools TS and long tools TL. Note that instead of storing information indicating the normal tool TS or the long tool TL, a length threshold may be stored, and whether a tool is a normal tool TS or a long tool TL may be determined from the length threshold and the tool length information stored in the tool information storage unit 712.

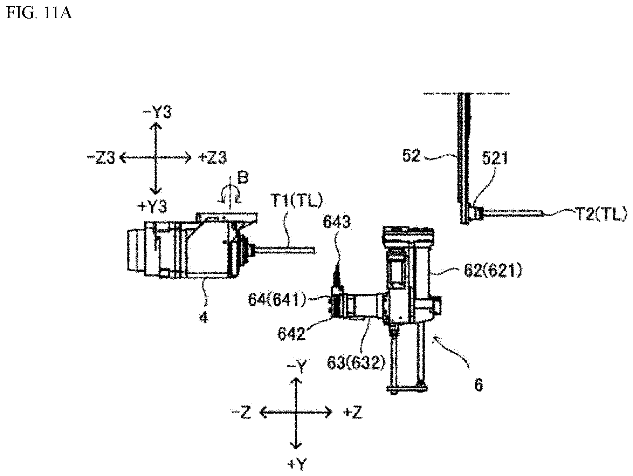

The exchange operation control unit 72 controls the operations of the tool spindle 4, the tool storage device 5, and the tool exchange device 6 during tool exchange. The exchange operation control unit 72 obtains information from the tool information storage unit 712 as to whether the attached tool T1 currently attached to the tool spindle 4 (see FIG. 1) and a next attached tool T2 (see FIGS. 11A and 11B) specified in the NC program as the tool to be attached to the tool spindle 4 next are normal tools TS or long tools TL. Then, an operation pattern of the machine tool 1 in the tool exchange operation is determined on the basis of whether the attached tool T1 is a long tool TL or a normal tool TS and whether the next attached tool T2 is a long tool TL or a normal tool TS. The operations for determining the operation pattern by the exchange operation control unit 72, and the operations for exchanging tools according to the determined operation pattern, will be described below with reference to flowcharts.

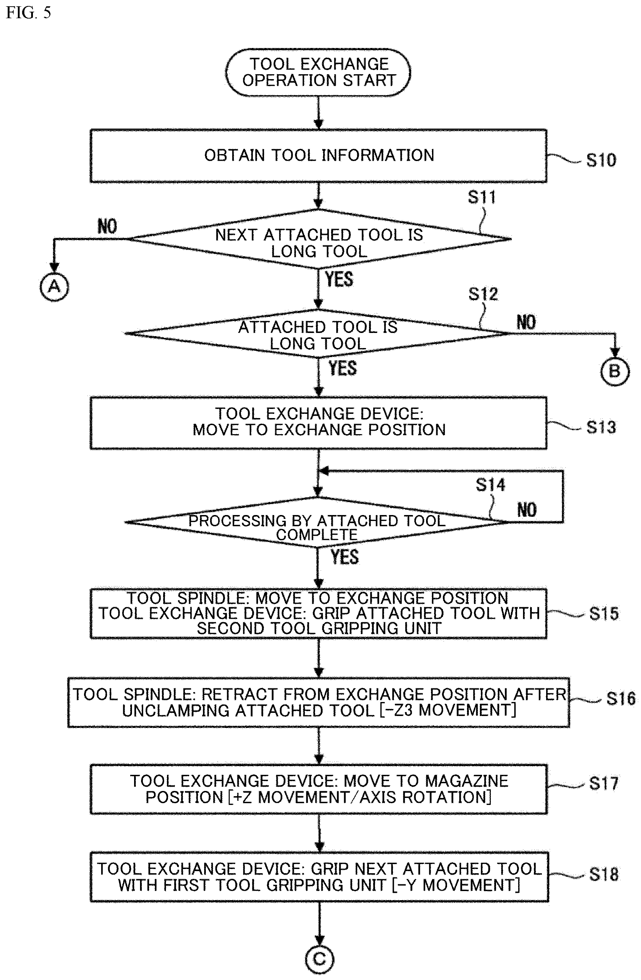

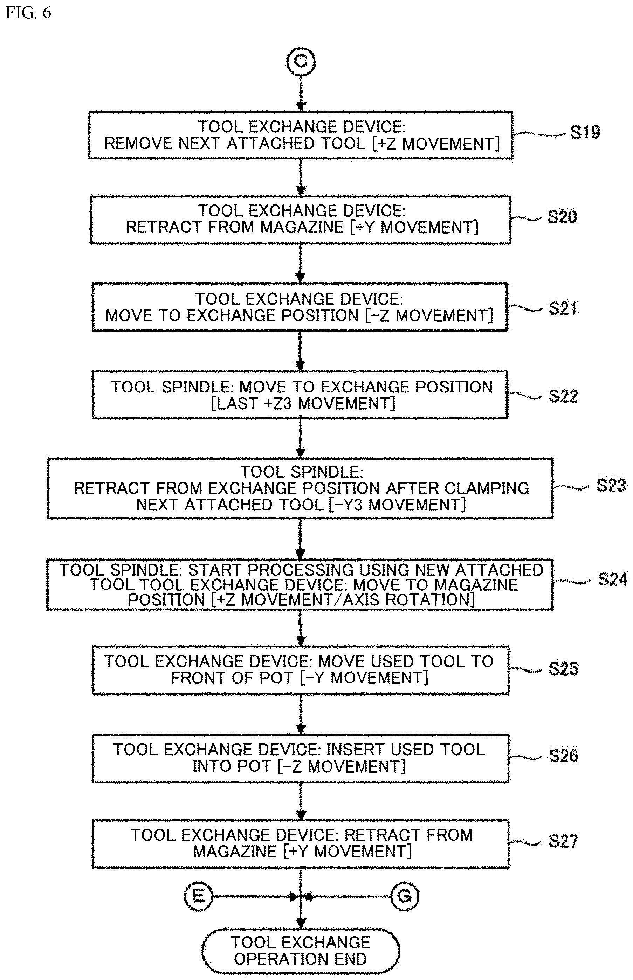

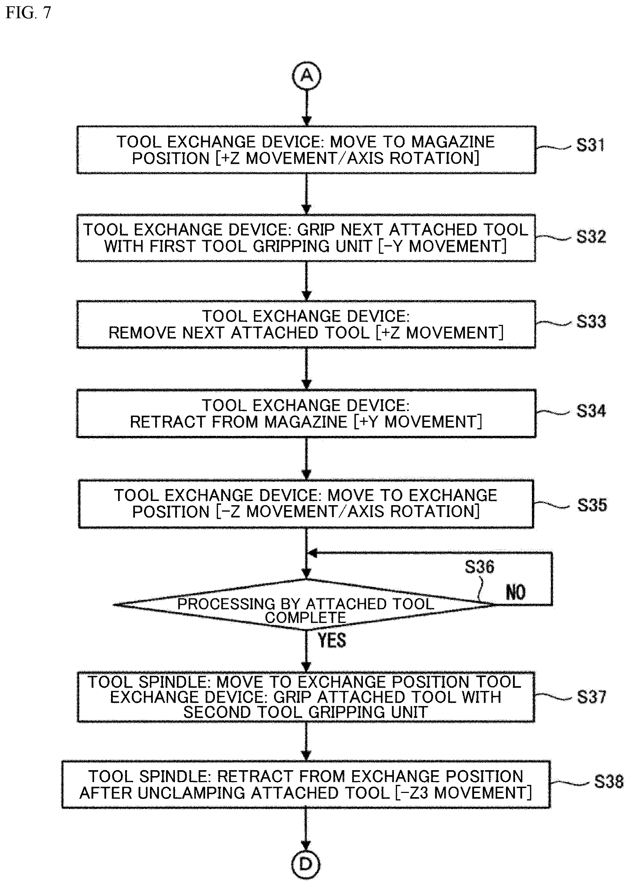

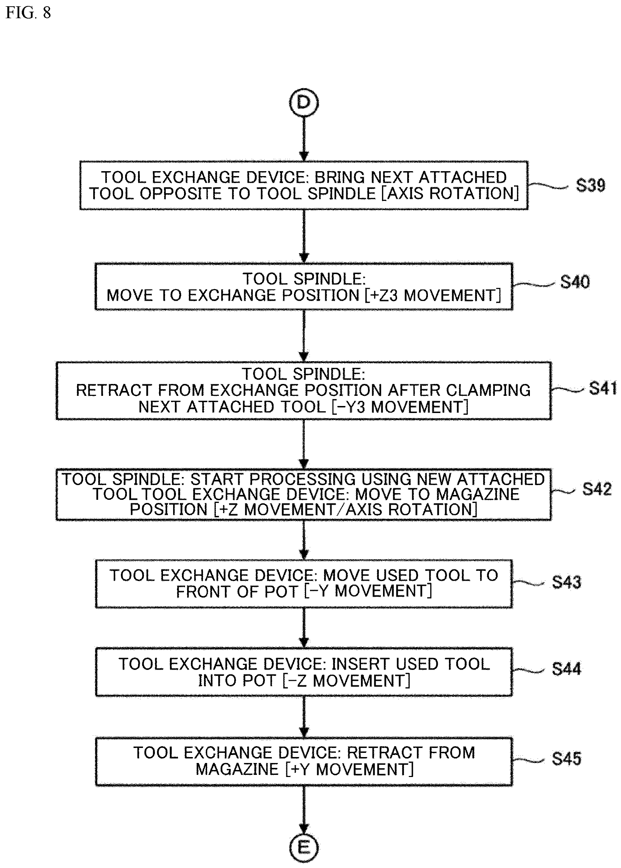

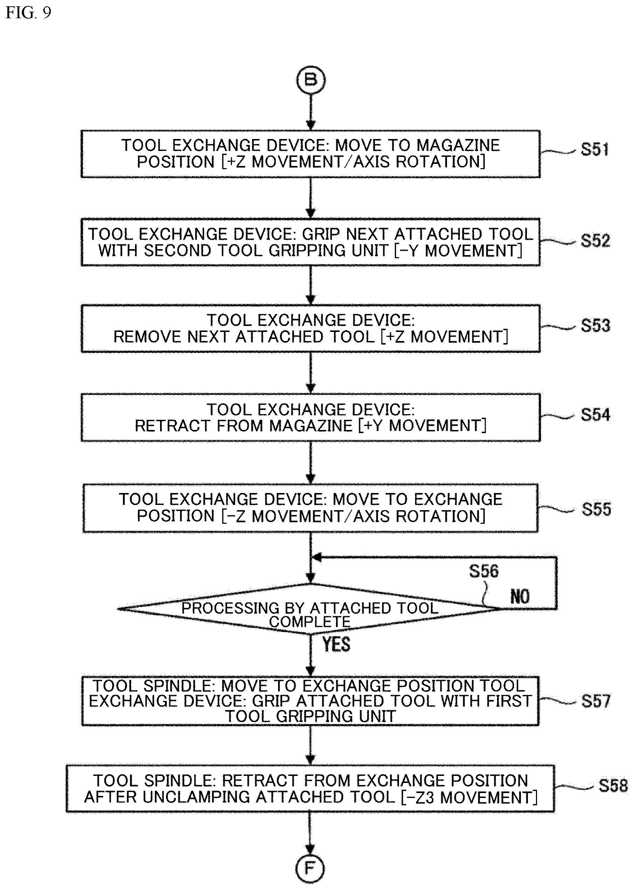

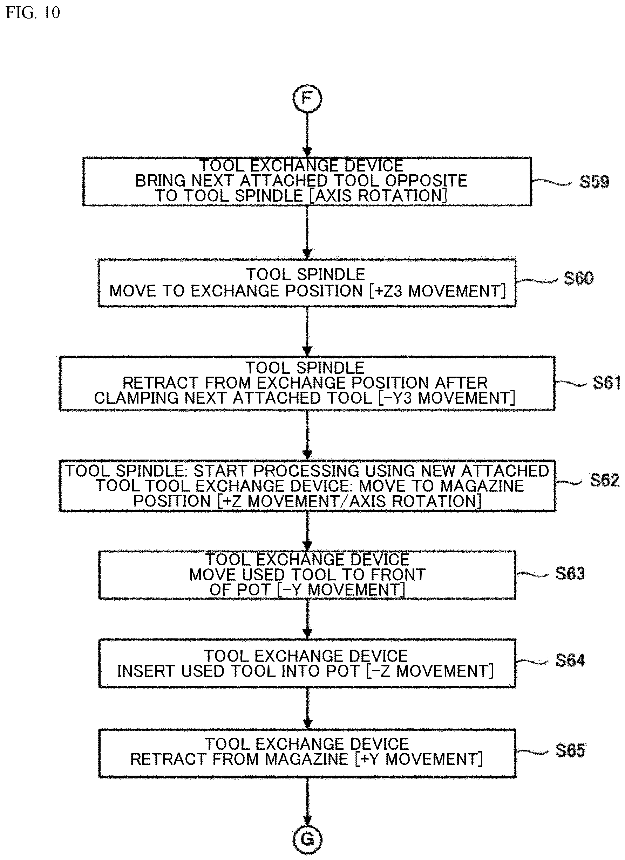

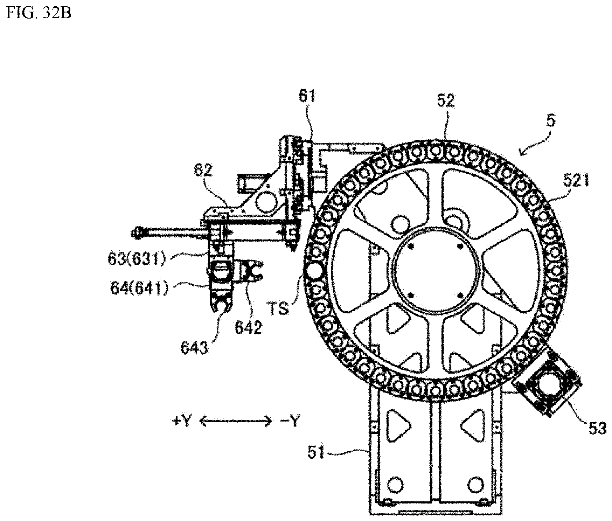

The tool exchange operation performed by the machine tool 1 will be described below with reference to the flowcharts in FIGS. 5 to 10, and the plan views and right-side views in FIGS. 11A and 11B to FIGS. 32A and 32B. Note the tool exchange operation will be described according to an example in which the next attached tool T2 is removed from the second-stage tool magazine 52, and a used tool removed from the tool spindle 4 is stored in the second-stage tool magazine 52. An example in which the next attached tool T2 is removed from the first-stage tool magazine 52 and an example in which a used tool removed from the tool spindle 4 is stored in the first-stage tool magazine 52 will not be described.

FIGS. 5 to 10 are flowcharts illustrating the tool exchange operation. The tool exchange operation is executed by the control apparatus 7 by operating the machine tool 1 in accordance with the NC program.

As illustrated in FIG. 5, first, the exchange operation control unit 72 obtains, from the tool information storage unit 712, information indicating whether the next attached tool T2 is a normal tool TS or a long tool TL, and information indicating whether the attached tool T1 is a normal tool TS or a long tool TL (step S10). This step S10 corresponds to an example of a step of obtaining information. Note that in this step S10, only information indicating whether the next attached tool T2 is a normal tool TS or a long tool TL may be obtained, and a step of obtaining information indicating whether the attached tool T1 is a normal tool TS or a long tool TL may be provided between steps S11 and S12. In this case, the step of obtaining information provided between steps S11 and S12 also corresponds to an example of a step of obtaining information.

Next, the exchange operation control unit 72 determines whether the next attached tool T2 is a long tool TL on the basis of the information obtained in step S10 (step S11). If the next attached tool T2 is a long tool TL (YES in step S11), the exchange operation control unit 72 determines whether the attached tool T1 currently attached to the tool spindle 4 is a long tool TL on the basis of the information obtained in step S10 (step S12). These steps S11 and S12 correspond to an example of a step of determining an operation pattern. If the next attached tool T2 and the attached tool T1 are both long tools TL (YES in step S12), the exchange operation control unit 72 determines the operation pattern of the tool exchange device 6 to be the operation pattern performed in steps S13 to S27 described below. The operation pattern performed in steps S13 to S27 may be referred to as a "first operation pattern" hereinafter.

In the first operation pattern, while the machine tool 1 is performing processing using the attached tool T1, the exchange operation control unit 72 moves the tool exchange arm 64 to an exchange position for exchanging the tool with the tool spindle 4 (step S13). In the movement performed in step S13, the exchange operation control unit 72 moves the tool exchange arm 64 to the exchange position while changing the attitude of the tool exchange arm 64 to the second attitude in which the second tool gripping unit 643 projects in the -Y direction.

FIG. 11A is a plan view illustrating a state in which step S13 is complete, and FIG. 11B is a right side view of the same. Note that in the drawings illustrating the tool exchange operation, tools other than the attached tool T1, the next attached tool T2, and the tools immediately after being removed from the tool spindle 4 and stored in the tool magazine 52 are omitted for the sake of clarity. Additionally, in the drawings illustrating the tool exchange operation, only the second-stage tool magazine 52 of the tool storage device 5 is illustrated, and in the plan view, the tool pots 521 other than the tool pot 521 in a transferable position, as well as the first movement mechanism 61, are not illustrated. Furthermore, in the drawings illustrating the tool exchange operation, the tool spindle 4 is not illustrated when in situations with little relevance to the operation of the tool spindle 4.

As illustrated in FIGS. 11A and 11B, the tool exchange arm 64 standing by in the exchange position is in the second attitude in which the first tool gripping unit 642 projects upward and the second tool gripping unit 643 projects in the -Y direction. At this time, neither the first tool gripping unit 642 nor the second tool gripping unit 643 are gripping a tool. Additionally, the exchange operation control unit 72 rotates the tool magazine 52 so that the next attached tool T2 is disposed at the position furthest on the +Y side of the tool magazine 52. The position furthest on the +Y side is the position at which the next attached tool T2 can be transferred to the tool exchange device 6.

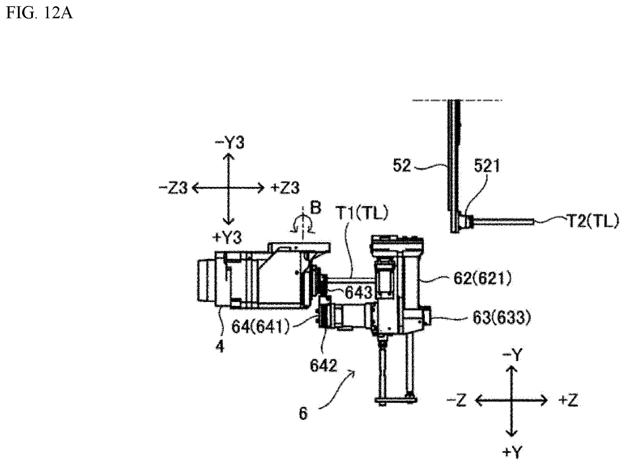

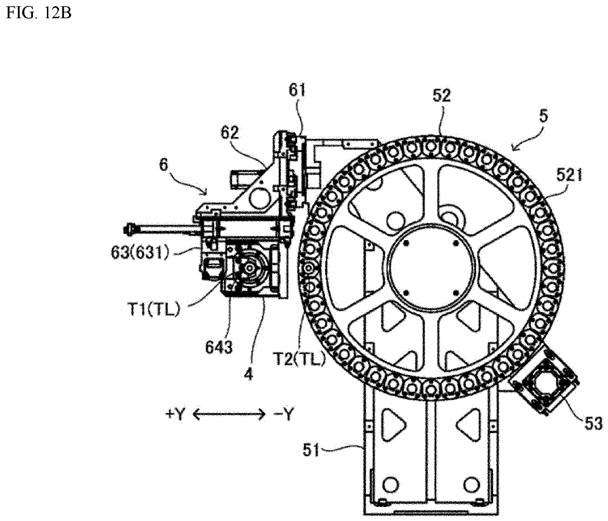

After step S13 is complete, the exchange operation control unit 72 causes the tool exchange device 6 to stand by until the processing using the attached tool T1 attached to the tool spindle 4 is complete (step S14).
After the processing using the attached tool T1 is complete (YES in step S14), the exchange operation control unit 72 moves the tool spindle 4, with the tip of the attached tool T1 facing in the +Z3 direction, in the +Z3 direction to approach the tool exchange arm 64, and the moves the tool spindle 4 in the +Y3 direction and into the tool exchange position.
As a result, the second tool gripping unit 643 grips the attached tool T1 (step S15). FIG. 12A is a plan view illustrating a state in which step S15 is complete, and FIG. 12B is a right side view of the same. During the +Y3 movement of the tool spindle 4 in step S15, the gripped portion of the attached tool T1 contacts the projecting ends of the gripping claws of the second tool gripping unit 643, and the gripped portion of the attached tool T1 pushes the projecting ends apart and enters into the space between the pair of gripping claws. Then, as the tool spindle 4 moves further in the +Y3 direction, the gripped portion is positioned further in the +Y direction than the projecting ends of the gripping claws, and the attached tool T1 is gripped by the second tool gripping unit 643, as illustrated in FIGS. 12A and 12B.

After the gripping of the attached tool T1 by the second tool gripping unit 643 is complete, the exchange operation control unit 72 unclamps the attached tool T1 and moves the tool spindle 4 in the -Z3 direction (step S16). The attached tool T1 is removed from the tool spindle 4 as a result. A gap is then formed in the Z-axis direction between the tip of the tool spindle 4 and the removed used tool.

Next, the exchange operation control unit 72 moves the tool exchange arm 64 in the +Z direction while rotating the arm rotation shaft 641 to the first attitude (step S17). As a result of step S17, the second tool gripping unit 643, which is gripping the used tool, is in a downward-projecting attitude.
The first tool gripping unit 642 projects in the -Y direction and is positioned opposite the gripped portion of the next attached tool T2.

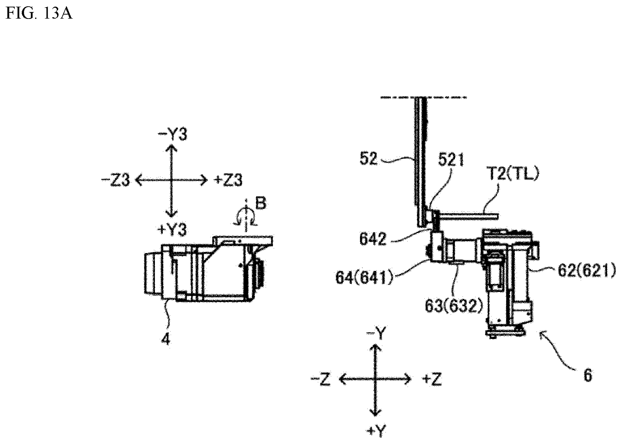

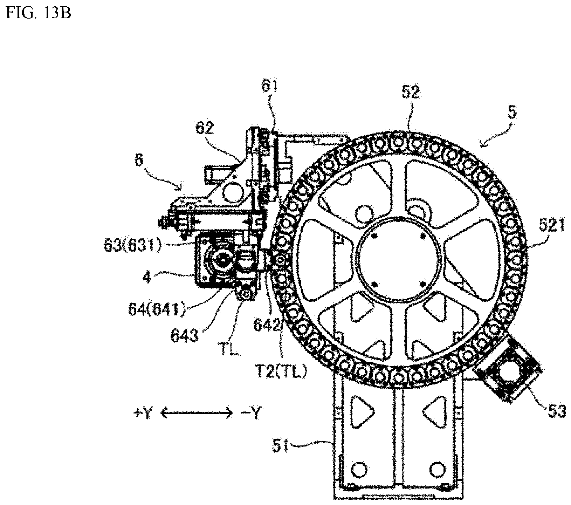

The exchange operation control unit 72 then moves the tool exchange arm 64 in the -Y direction to grip the next attached tool T2 with the first tool gripping unit 642 (step S18). FIG. 13A is a plan view illustrating a state in which step S18 is complete, and FIG. 13B is a right side view of the same. As illustrated in FIGS. 13A and 13B, in step S 18, the tool exchange arm 64 moves in the -Y direction with the arm support portion 63 as a result of the drive cylinder 621 moving the arm support portion 63 in the -Y direction. During the -Y movement, the gripped portion of the next attached tool T2 contacts the projecting ends of the gripping claws of the first tool gripping unit 642, and the gripped portion of the next attached tool T2 pushes the projecting ends apart and enters between the pair of gripping claws. Then, the tool exchange arm 64 moves further in the -Y direction, and the next attached tool T2 is gripped by the first tool gripping unit 642 as a result.

After the next attached tool T2 is gripped by the first tool gripping unit 642, the exchange operation control unit 72 moves the tool exchange arm 64 in the +Z direction (step S19). As a result of the tool exchange arm 64 moving in the +Z direction, the next attached tool T2 gripped by the first tool gripping unit 642 is removed from the tool pot 521 of the tool magazine 52.

After step S 19, the exchange operation control unit 72 moves the tool exchange arm 64 in the +Y direction to retract the tool magazine 52 (step S20). In step S20, the tool exchange arm 64 moves in the +Y direction with the arm support portion 63 as a result of the drive cylinder 621 moving the arm support portion 63 in the +Y direction.

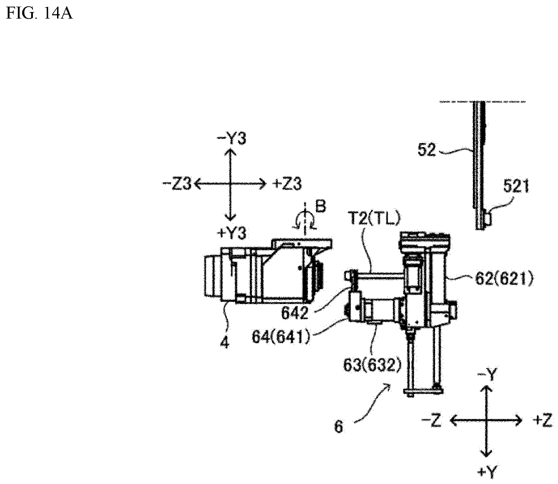

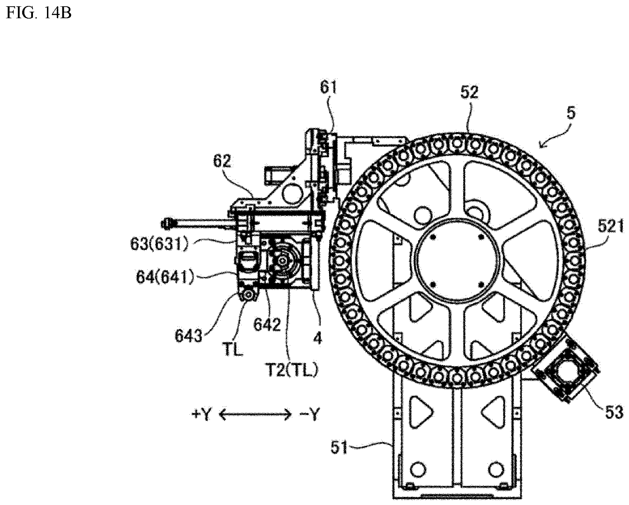

After step S20 is complete, the exchange operation control unit 72 moves the tool exchange arm 64 in the -Z direction to the tool exchange position (step S21). FIG. 14A is a plan view illustrating a state in which step S21 is complete, and FIG. 14B is a right side view of the same. As illustrated in FIGS. 14A and 14B, the tool exchange arm 64 is stopped in the exchange position, with the first tool gripping unit 642 gripping the next attached tool T2 in an attitude of projecting in the -Y direction.

The exchange operation control unit 72 then moves the tool spindle 4 in the +Z3 direction (step S22).

As a result, the shank of the next attached tool T2 gripped by the first tool gripping unit 642 is inserted into the tool spindle 4 on the tip side thereof.

After step S22 is complete, the exchange operation control unit 72 causes the tool spindle 4 to clamp the next attached tool T2, and then moves the tool spindle 4 in the -Y3 direction to retract from the tool exchange position (step S23). As a result, the next attached tool T2 is attached to the tool spindle 4, and the first tool gripping unit 642 releases its grip on the next attached tool T2. In this manner, in the first operation pattern in which the attached tool T1 and the next attached tool T2 are both long tools TL, the tool exchange arm 64 is not rotated while the first tool gripping unit 642 is gripping the next attached tool T2, and thus the long tool TL and the arm support portion 63 do not interfere with each other. Furthermore, in the first operation pattern, after the attached tool T1 is gripped by the second tool gripping unit 643 and removed from the tool spindle 4, the next attached tool T2 is gripped by the first tool gripping unit 642, removed from the tool storage device 5, and attached to the tool spindle 4 before the removed used tool is stored in the tool storage device 5, which enables rapid exchange.

The exchange operation control unit 72 then starts processing using the tool newly attached to the tool spindle 4. On the other hand, the exchange operation control unit 72 moves the tool exchange arm 64 in the +Z direction while rotating the arm rotation shaft 641 to the second attitude (step S24). As a result of step S24, the first tool gripping unit 642, which is not gripping the tool, is in an upward projecting attitude.
Additionally, the second tool gripping unit 643 is in an attitude projecting in the -Y direction, and the used tool removed from the tool spindle 4 is located slightly further in the +Z direction than the tool pot 521 of the tool magazine 52.

Next, the exchange operation control unit 72 moves the tool exchange arm 64 in the -Y direction (step S25). As a result, the used tool gripped by the second tool gripping unit 643 is disposed in a position slightly distanced, in the Z-axis direction, from the tool pot 521 of the tool magazine 52 positioned furthest on the +Y side, with the shank of the used tool opposite that tool pot 521.

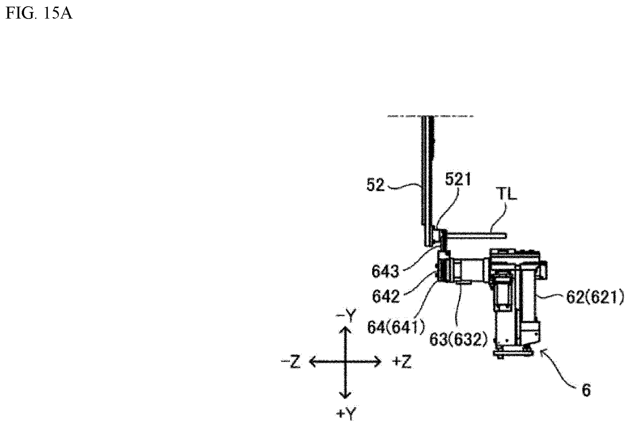

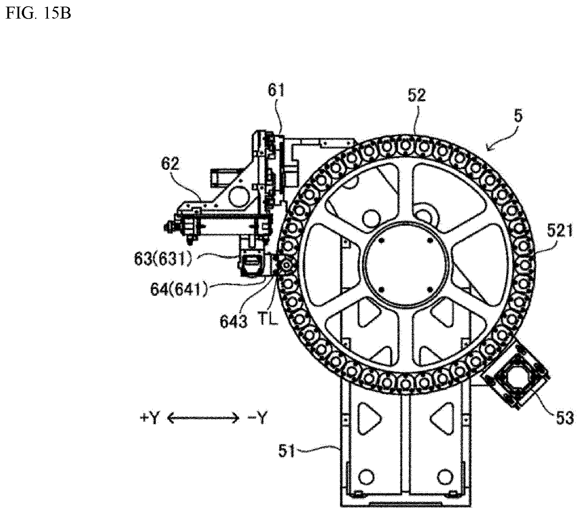

After step S25, the exchange operation control unit 72 moves the tool exchange arm 64 in the -Z direction (step S26). FIG. 15A is a plan view illustrating a state in which step S26 is complete, and FIG. 15B is a right side view of the same. As illustrated in FIGS. 15A and 15B, when the tool exchange arm 64 moves in the -Z direction, the shank of the used tool gripped by the second tool gripping unit 643 is inserted into the tool pot 521 of the tool magazine 52 located furthest on the +Y side, and that used tool is stored in the tool magazine 52.

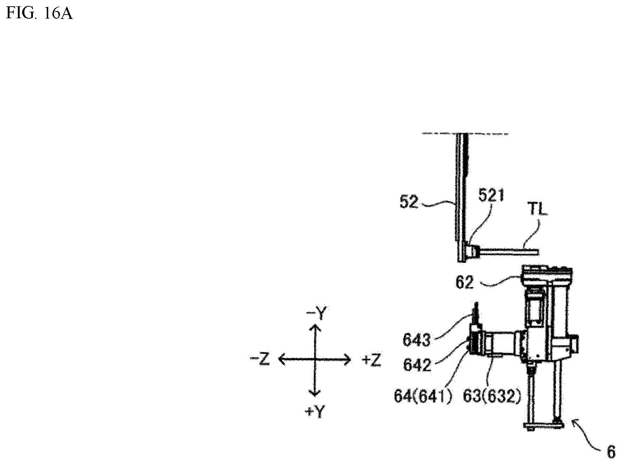

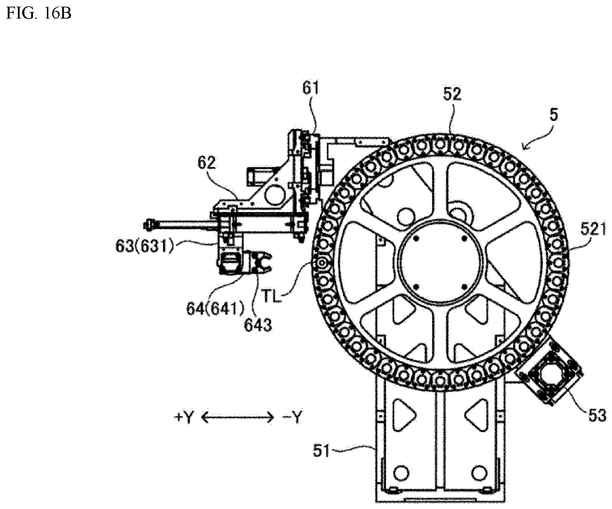

Then, the exchange operation control unit 72 moves the tool exchange arm 64 in the +Y direction (step S27). FIG. 16A is a plan view illustrating a state in which step S27 is complete, and FIG. 16B is a right side view of the same. As illustrated in FIGS. 16A and 16B, by moving the tool exchange arm 64 in the +Y direction, the second tool gripping unit 643 releases its grip on the used tool, and the tool exchange arm 64 separates from the tool magazine 52. After step S27 is complete, the tool exchange operation according to the first operation pattern ends.

If, in step S11, the next attached tool T2 is determined not to be a long tool TL (NO in step S11), the exchange operation control unit 72 determines the operation pattern of the tool exchange device 6 to be the operation pattern performed in steps S31 to S45, described below. The operation pattern performed in steps S31 to S45 may be referred to as a "second operation pattern" hereinafter.

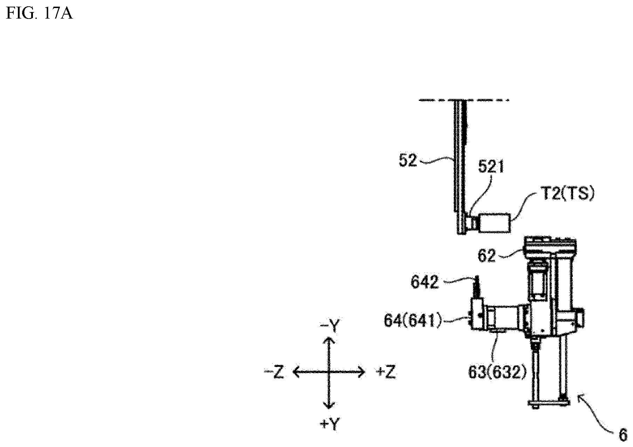

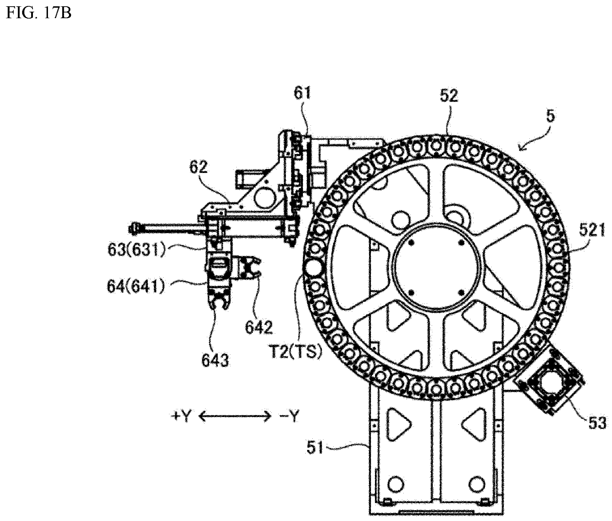

In the second operation pattern, the exchange operation control unit 72 moves the tool exchange arm 64 in the +Z direction while rotating the arm rotation shaft 641 to the first attitude (step S31). Note that at the same time or prior to this, the exchange operation control unit 72 causes the next attached tool T2 to be disposed at the position of the tool magazine 52 furthest on the +Y side. The next attached tool T2 is a tool determined not to be a long tool TL in step S11, and is therefore a normal tool TS. FIG. 17A is a plan view illustrating a state in which step S31 is complete, and FIG. 17B is a right side view of the same. As illustrated in FIGS. 17A and 17B, in step S31, the second tool gripping unit 643 is in a downward projecting attitude. The first tool gripping unit 642 is in an attitude projecting in the -Y direction and is positioned opposite the gripped portion of the next attached tool T2.

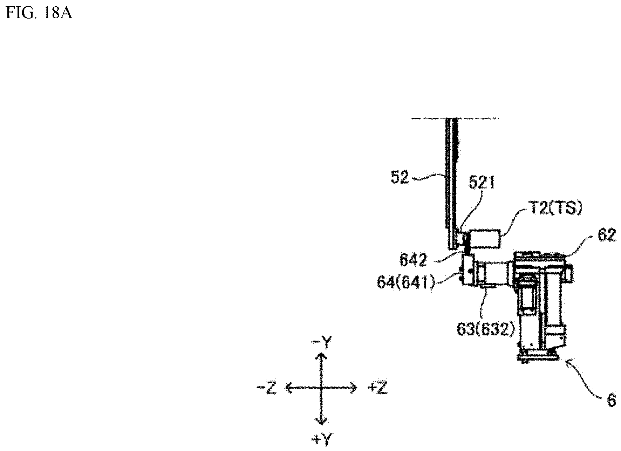

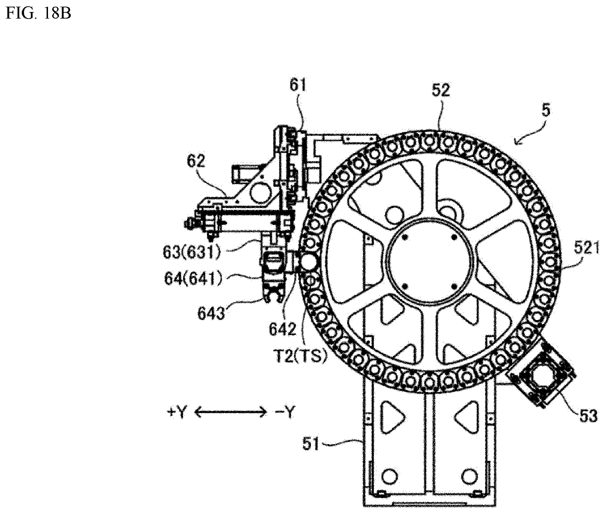

The exchange operation control unit 72 then moves the tool exchange arm 64 in the -Y direction to grip the next attached tool T2 with the first tool gripping unit 642 (step S32). FIG. 18A is a plan view illustrating a state in which step S32 is complete, and FIG. 18B is a right side view of the same. As illustrated in FIGS. 18A and 18B, the first tool gripping unit 642 grips the next attached tool T2 as a result of the tool exchange arm 64 moving in the -Y direction.

After the next attached tool T2 is gripped by the first tool gripping unit 642, the exchange operation control unit 72 moves the tool exchange arm 64 in the +Z direction (step S33). As a result of the tool exchange arm 64 moving in the +Z direction, the next attached tool T2 gripped by the first tool gripping unit 642 is removed from the tool pot 521 of the tool magazine 52.

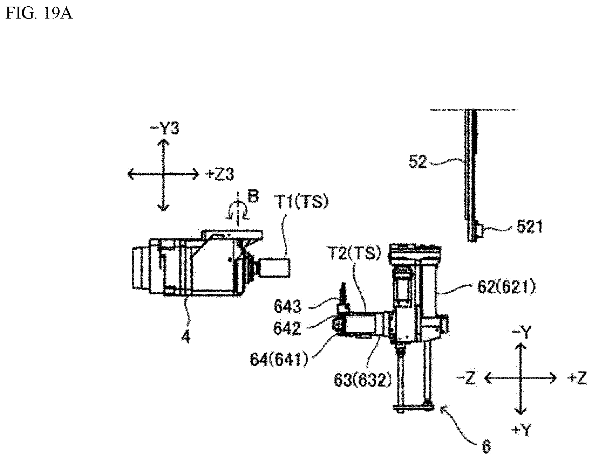

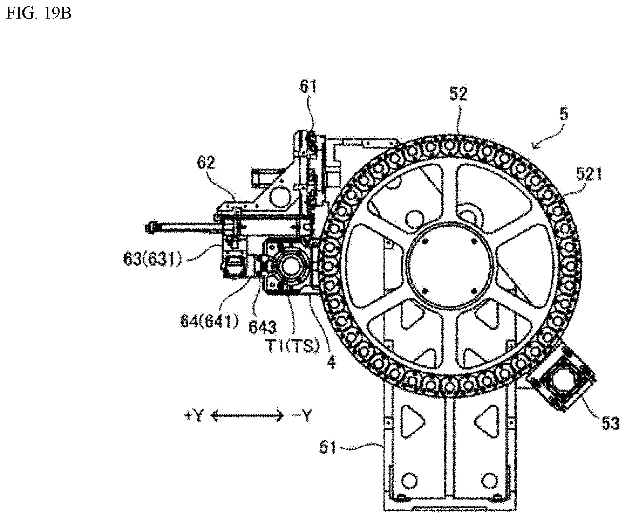

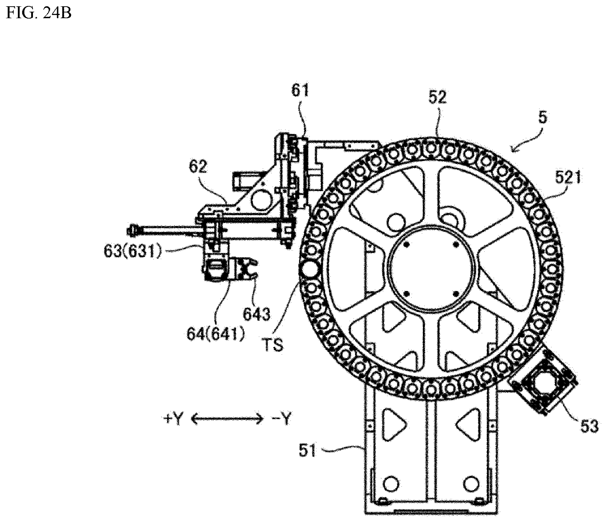

After step S33, the exchange operation control unit 72 moves the tool exchange arm 64 in the +Y direction (step S34). Next, the exchange operation control unit 72 moves the tool exchange arm 64 in the -Z direction to the tool exchange position while rotating the arm rotation shaft 641 to the second attitude (step S35). FIG. 19A is a plan view illustrating a state in which step S35 is complete, and FIG. 19B is a right side view of the same. As illustrated in FIGS. 19A and 19B, the tool exchange arm 64 is in the second attitude, in which the first tool gripping unit 642 gripping the next attached tool T2 projects upward and the second tool gripping unit 643 not gripping the tool projects in the -Y direction. Note that although FIGS. 19A and 19B to FIGS. 24A and 24B illustrate an example in which the attached tool T1 is a normal tool TS, the attached tool T1 in the second operation pattern may be a long tool TL.

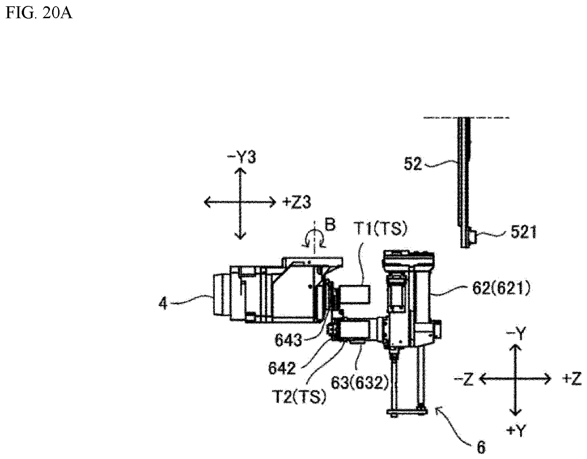

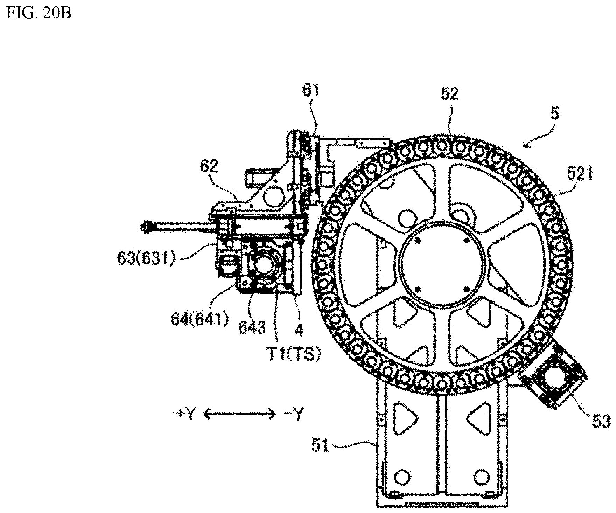

After step S35 is complete, the exchange operation control unit 72 causes the tool exchange device 6 to stand by until the processing using the attached tool T1 attached to the tool spindle 4 is complete (step S36).
After the processing using the attached tool T1 is complete (YES in step S36), the exchange operation control unit 72 moves the tool spindle 4, with the tip of the attached tool T1 facing in the +Z3 direction, in the +Z3 direction to approach the tool exchange arm 64, and the moves the tool spindle 4 in the +Y3 direction and into the tool exchange position.
As a result, the second tool gripping unit 643 grips the attached tool T1 (step S37). FIG. 20A is a plan view illustrating a state in which step S37 is complete, and FIG. 20B is a right side view of the same. As illustrated in FIGS. 20A and 20B, when the tool spindle 4 moves in the +Y3 direction, the gripped portion of the attached tool T1 enters between the pair of gripping claws, and the attached tool T1 is gripped by the second tool gripping unit 643.

After the gripping of the attached tool T1 by the second tool gripping unit 643 is complete, the exchange operation control unit 72 unclamps the attached tool T1 and moves the tool spindle 4 in the -Z3 direction (step S38). The attached tool T1 is removed from the tool spindle 4 as a result. A gap is then formed in the Z-axis direction between the tip of the tool spindle 4 and the removed used tool.

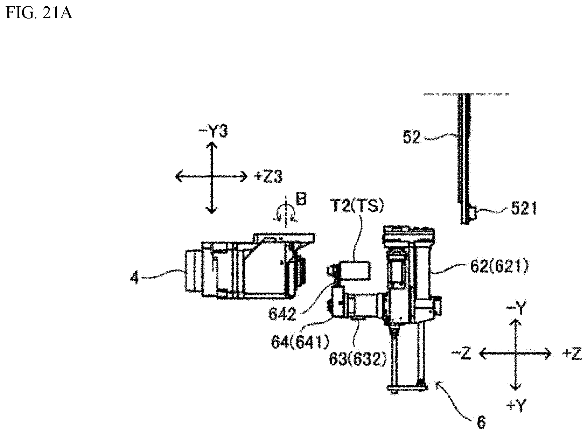

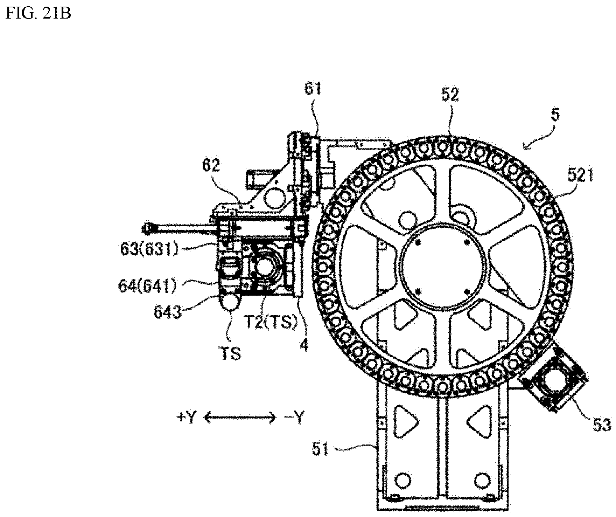

After the -Z3 movement of the tool spindle 4 is complete, the exchange operation control unit 72 rotates the arm rotation shaft 641 to change the attitude to the first attitude (step S39). FIG. 21A is a plan view illustrating a state in which step S39 is complete, and FIG. 21B is a right side view of the same. As illustrated in FIGS. 21A and 21B, the tool exchange arm 64 is in the first attitude, in which the first tool gripping unit 642 gripping the next attached tool T2 projects in the -Y direction and the second tool gripping unit 643 gripping the used tool removed from the tool spindle 4 projects downward. In this manner, in the second operation pattern in which the next attached tool T2 is the normal tool TS, even if the tool exchange arm 64 is rotated while the first tool gripping unit 642 grips the next attached tool T2, the next attached tool T2 and the arm support portion 63 will not interfere with each other.

The exchange operation control unit 72 then moves the tool spindle 4 in the +Z3 direction (step S40).
As a result, the shank of the next attached tool T2 gripped by the first tool gripping unit 642 is inserted into the tool spindle 4 on the tip side thereof.

After step S40 is complete, the exchange operation control unit 72 causes the tool spindle 4 to clamp the next attached tool T2, and then moves the tool spindle 4 in the -Y3 direction (step S41). As a result, the next attached tool T2 is attached to the tool spindle 4, and the first tool gripping unit 642 releases its grip on the next attached tool T2.

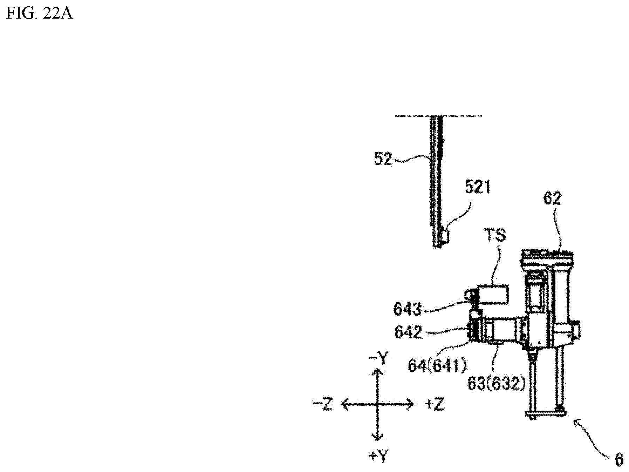

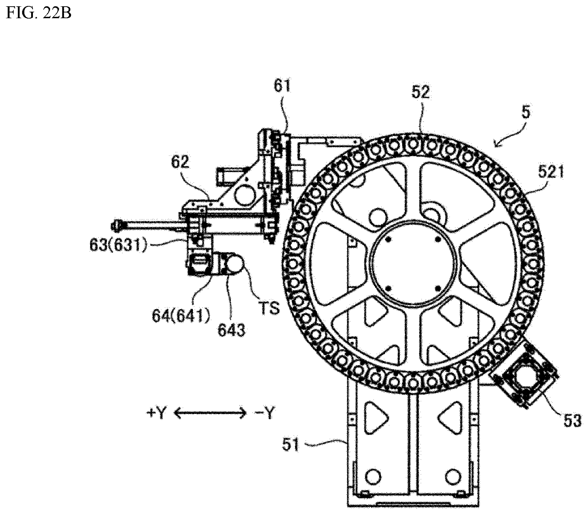

The exchange operation control unit 72 then starts processing using the tool newly attached to the tool spindle 4. On the other hand, the exchange operation control unit 72 moves the tool exchange arm 64 in the +Z direction while rotating the arm rotation shaft 641 to the second attitude (step S42). FIG. 22A is a plan view illustrating a state in which step S42 is complete, and FIG. 22B is a right side view of the same. As illustrated in FIGS. 22A and 22B, the tool exchange arm 64 is positioned with the first tool gripping unit 642, which is not gripping a tool, in an upwardly projecting attitude, and the used tool removed from the tool spindle 4 gripped by the second tool gripping unit 643 projecting in the -Y direction and positioned slightly further in the +Z direction than the tool pots 521 of the tool magazine 52.

Next, the exchange operation control unit 72 moves the tool exchange arm 64 in the -Y direction (step S43). As a result, the used tool gripped by the second tool gripping unit 643 is disposed in a position slightly distanced, in the Z-axis direction, from the tool pot 521 of the tool magazine 52 positioned furthest on the +Y side, with the shank of the used tool opposite that tool pot 521.

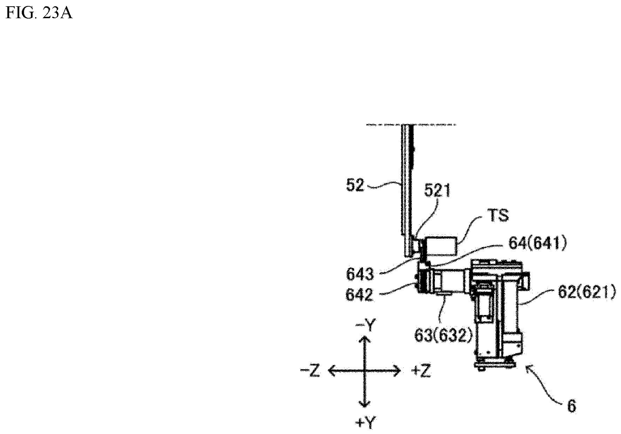

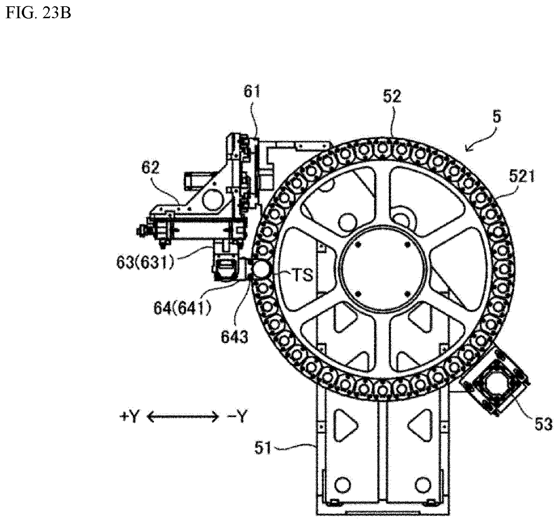

After step S43, the exchange operation control unit 72 moves the tool exchange arm 64 in the -Z direction (step S44). FIG. 23A is a plan view illustrating a state in which step S44 is complete, and FIG. 23B is a right side view of the same. As illustrated in FIGS. 23A and 23B, when the tool exchange arm 64 moves in the -Z direction, the shank of the used tool gripped by the second tool gripping unit 643 is inserted into the tool pot 521 of the tool magazine 52 located furthest on the +Y side, and that used tool is stored in the tool magazine 52.

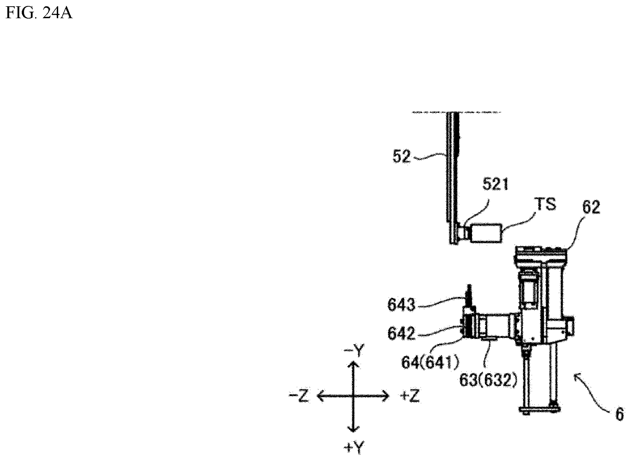

Then, the exchange operation control unit 72 moves the tool exchange arm 64 in the +Y direction (step S45). FIG. 24A is a plan view illustrating a state in which step S45 is complete, and FIG. 24B is a right side view of the same. As illustrated in FIGS. 24A and 24B, by moving the tool exchange arm 64 in the +Y direction, the second tool gripping unit 643 releases its grip on the used tool, and the tool exchange arm 64 separates from the tool magazine 52. After step S45 is complete, the tool exchange operation according to the second operation pattern ends.

If, in step S12, the next attached tool T2 is determined not to be a long tool TL (NO in step S12), the exchange operation control unit 72 determines the operation pattern of the tool exchange device 6 to be the operation pattern performed in steps S51 to S65, described below. The operation pattern performed in steps S51 to S65 may be referred to as a "third operation pattern" hereinafter.

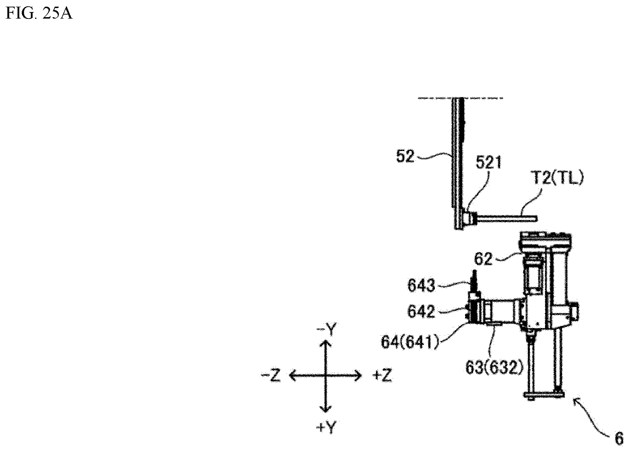

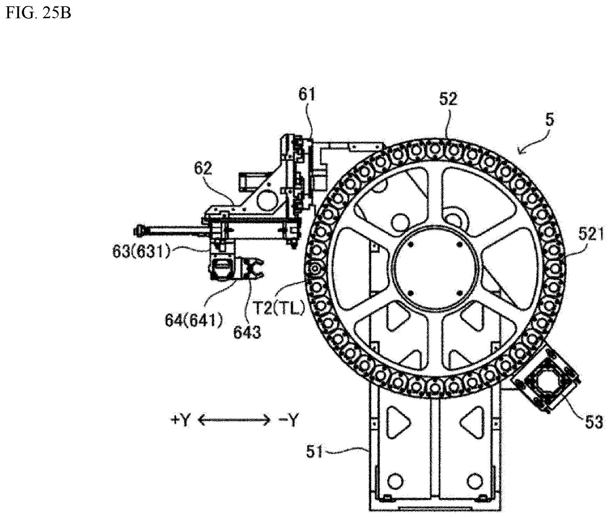

In the third operation pattern, the exchange operation control unit 72 moves the tool exchange arm 64 in the +Z direction while rotating the arm rotation shaft 641 to the second attitude (step S51). Note that at the same time or prior to this, the exchange operation control unit 72 causes the next attached tool T2 to be disposed at the position of the tool magazine 52 furthest on the +Y side. The next attached tool T2 is a tool determined to be a long tool TL in step S11, and is therefore a long tool TL. FIG. 25A is a plan view illustrating a state in which step S31 is complete, and FIG. 25B is a right side view of the same. As illustrated in FIGS. 25A and 25B, as a result of step S51, the second tool gripping unit 643 is in an attitude projecting in the -Y direction and is positioned opposite the gripped portion of the next attached tool T2. The first tool gripping unit 642 is in an upward projecting attitude.

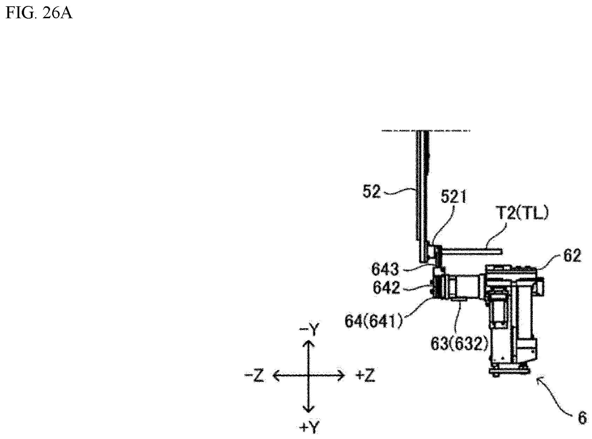

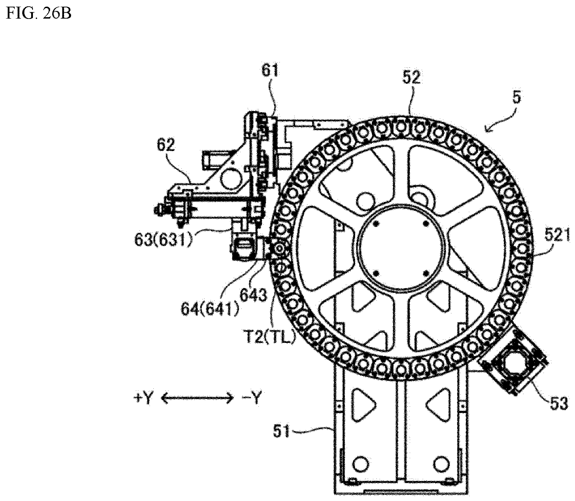

The exchange operation control unit 72 then moves the tool exchange arm 64 in the -Y direction to grip the next attached tool T2 with the second tool gripping unit 643 (step S52). FIG. 26A is a plan view illustrating a state in which step S32 is complete, and FIG. 26B is a right side view of the same. As illustrated in FIGS. 26A and 26B, the second tool gripping unit 643 grips the next attached tool T2 as a result of the tool exchange arm 64 moving in the -Y direction.

After the next attached tool T2 is gripped by the second tool gripping unit 643, the exchange operation control unit 72 moves the tool exchange arm 64 in the +Z direction (step S53). As a result of the tool exchange arm 64 moving in the +Z direction, the next attached tool T2 gripped by the second tool gripping unit 643 is removed from the tool pot 521 of the tool magazine 52.

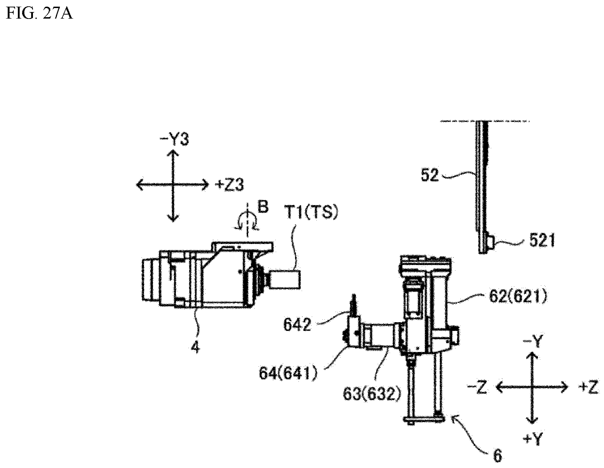

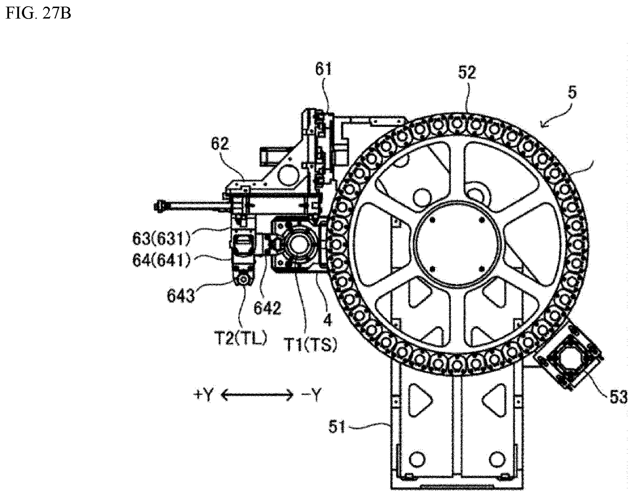

After step S53, the exchange operation control unit 72 moves the tool exchange arm 64 in the +Y direction (step S54). Next, the exchange operation control unit 72 moves the tool exchange arm 64 in the -Z direction to the tool exchange position while rotating the arm rotation shaft 641 to the first attitude (step S55). FIG. 27A is a plan view illustrating a state in which step S55 is complete, and FIG. 27B is a right side view of the same. As illustrated in FIGS. 27A and 27B, the tool exchange arm 64 is in the second attitude, in which the first tool gripping unit 642 not gripping the tool projects in the -Y direction and the second tool gripping unit 643 gripping the next attached tool T2 projects downward.

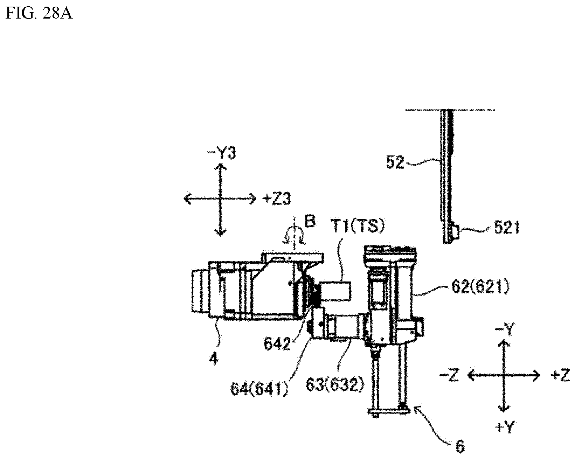

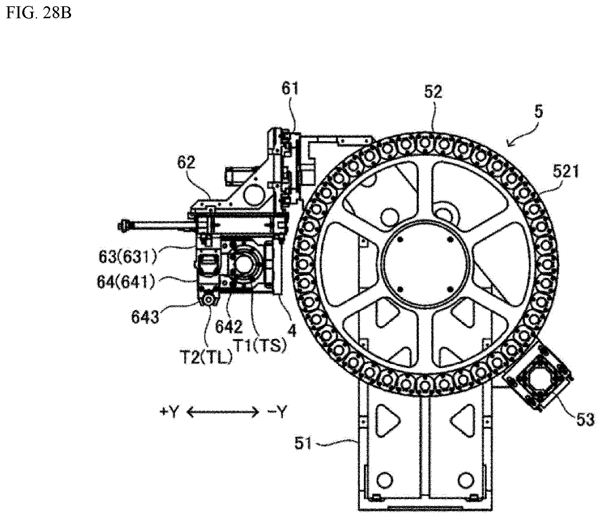

After step S55 is complete, the exchange operation control unit 72 causes the tool exchange device 6 to stand by until the processing using the attached tool T1 attached to the tool spindle 4 is complete (step S56).
After the processing using the attached tool T1 is complete (YES in step S56), the exchange operation control unit 72 moves the tool spindle 4, with the tip of the attached tool T1 facing in the +Z3 direction, in the +Z3 direction to approach the tool exchange arm 64, and the moves the tool spindle 4 in the +Y3 direction and into the tool exchange position.
As a result, the first tool gripping unit 642 grips the attached tool T1 (step S57). FIG. 28A is a plan view illustrating a state in which step S57 is complete, and FIG. 28B is a right side view of the same. As illustrated in FIGS. 28A and 28B, when the tool spindle 4 moves in the +Y3 direction, the gripped portion of the attached tool T1 enters between the pair of gripping claws, and the attached tool T1 is gripped by the first tool gripping unit 642.

After the gripping of the attached tool T1 by the first tool gripping unit 642 is complete, the exchange operation control unit 72 unclamps the attached tool T1 and moves the tool spindle 4 in the -Z3 direction (step S58). The attached tool T1 is removed from the tool spindle 4 as a result. A gap is then formed in the Z-axis direction between the tip of the tool spindle 4 and the removed used tool.

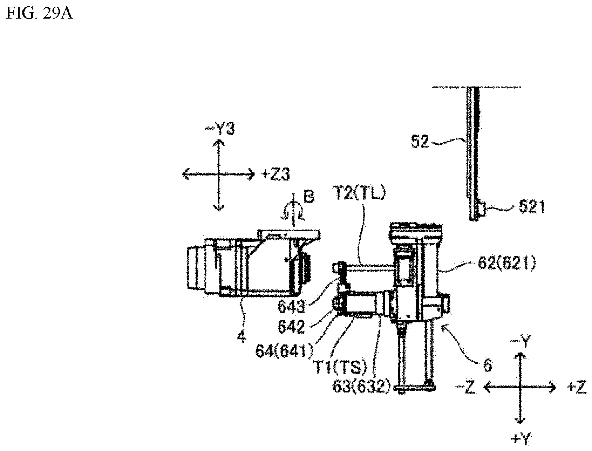

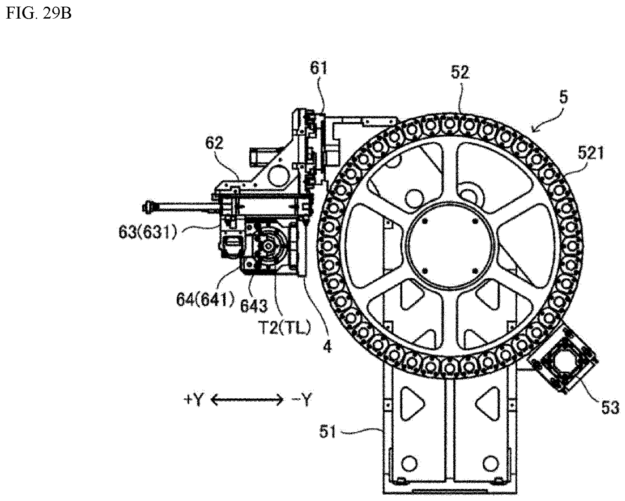

After the -Z3 movement of the tool spindle 4 is complete, the exchange operation control unit 72 rotates the arm rotation shaft 641 to change the attitude to the second attitude (step S59). FIG. 29A is a plan view illustrating a state in which step S59 is complete, and FIG. 29B is a right side view of the same. As illustrated in FIGS. 29A and 29B, the tool exchange arm 64 is in the first attitude, in which the first tool gripping unit 642 gripping the used tool removed from the tool spindle 4 projects upward and the second tool gripping unit 643 gripping the next attached tool T2 projects in the -Y direction. In this manner, in the third operation pattern, the attached tool T1 (the used tool), which is a normal tool TS, is gripped by the first tool gripping unit 642, and the next attached tool T2, which is a long tool TL, is gripped by the second tool gripping unit 643, and thus even if the tool exchange arm 64 is rotated, the long tool TL and the arm support portion 63 do not interfere with each other.

The exchange operation control unit 72 then moves the tool spindle 4 in the +Z3 direction (step S60).
As a result, the shank of the next attached tool T2 gripped by the second tool gripping unit 643 is inserted into the tool spindle 4 on the tip side thereof.

After step S60 is complete, the exchange operation control unit 72 causes the tool spindle 4 to clamp the next attached tool T2, and then moves the tool spindle 4 in the -Y3 direction (step S61). As a result, the next attached tool T2 is attached to the tool spindle 4, and the second tool gripping unit 643 releases its grip on the next attached tool T2.

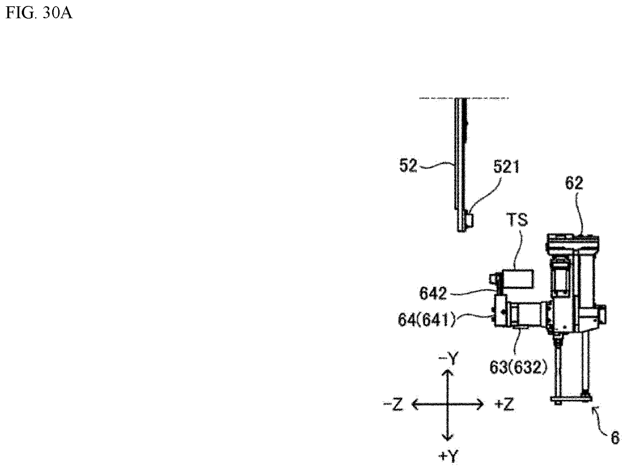

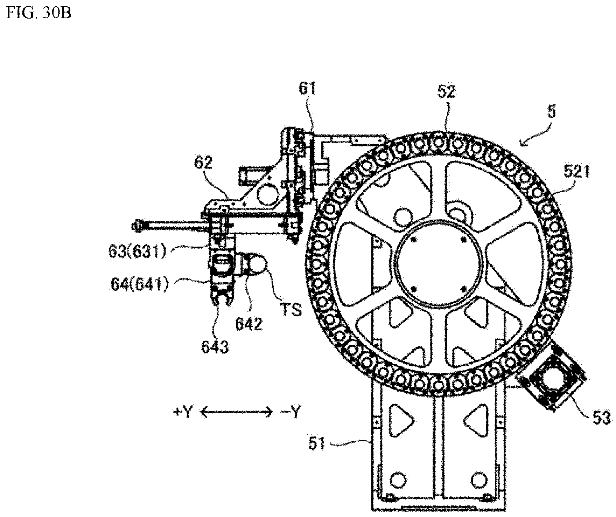

The exchange operation control unit 72 then starts processing using the tool newly attached to the tool spindle 4. On the other hand, the exchange operation control unit 72 moves the tool exchange arm 64 in the +Z direction while rotating the arm rotation shaft 641 to the first attitude (step S62). FIG. 30A is a plan view illustrating a state in which step S62 is complete, and FIG. 30B is a right side view of the same. As illustrated in FIGS. 30A and 30B, the tool exchange arm 64 is positioned with the second tool gripping unit 643, which is not gripping a tool, in a downward projecting attitude, and the used tool removed from the tool spindle 4 gripped by the first tool gripping unit 642 projecting in the -Y direction and positioned slightly further in the +Z direction than the tool pots 521 of the tool magazine 52.

Next, the exchange operation control unit 72 moves the tool exchange arm 64 in the -Y direction (step S63). As a result, the used tool gripped by the second tool gripping unit 643 is disposed in a position slightly distanced, in the Z-axis direction, from the tool pot 521 of the tool magazine 52 positioned furthest on the +Y side, with the shank of the used tool opposite that tool pot 521.

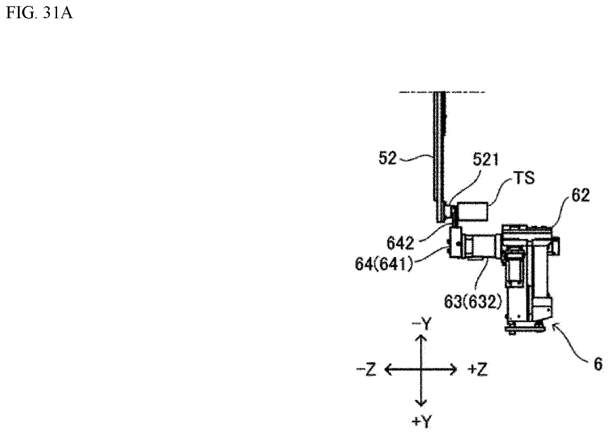

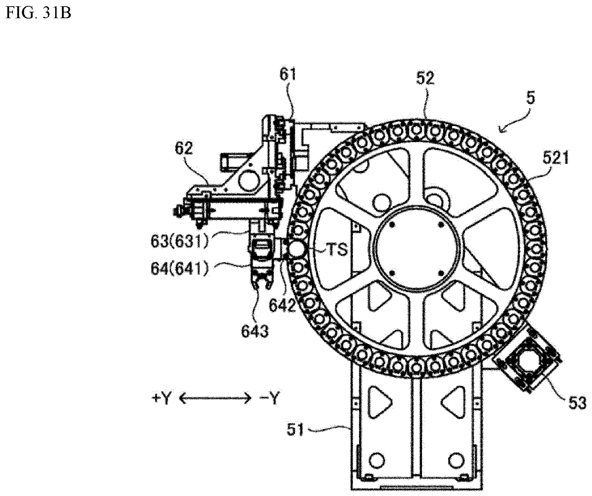

After step S63, the exchange operation control unit 72 moves the tool exchange arm 64 in the -Z direction (step S64). FIG. 31A is a plan view illustrating a state in which step S64 is complete, and FIG. 31B is a right side view of the same. As illustrated in FIGS. 31A and 31B, when the tool exchange arm 64 moves in the -Z direction, the shank of the used tool gripped by the first tool gripping unit 642 is inserted into the tool pot 521 of the tool magazine 52 located furthest on the +Y side, and that used tool is stored in the tool magazine 52.

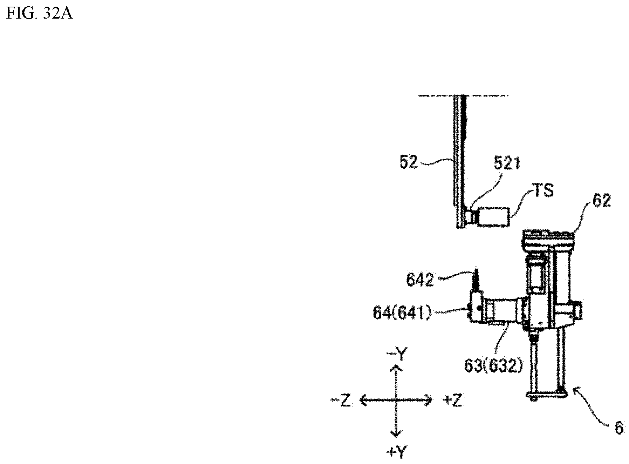

Then, the exchange operation control unit 72 moves the tool exchange arm 64 in the +Y direction (step S65). FIG. 32A is a plan view illustrating a state in which step S45 is complete, and FIG. 32B is a right side view of the same. As illustrated in FIGS. 32A and 32B, by moving the tool exchange arm 64 in the +Y direction, the first tool gripping unit 642 releases its grip on the used tool, and the tool exchange arm 64 separates from the tool magazine 52. After step S65 is complete, the tool exchange operation according to the third operation pattern ends. The steps S13 to S27, steps S31 to S45, and steps S51 to 65 described above correspond to an example of a step of performing an exchange operation.

According to the machine tool 1 of the present embodiment described above, the exchange operation control unit 72 determines an operation pattern on the basis of whether the attached tool T1 and the next attached tool T2 are long tools TL or normal tools TS, respectively, and causes the tool exchange operation to be performed according to the determined operation pattern. This enables the tool exchange operation to be performed using the tool storage device 5, which is capable of storing the long tools TL and the normal tools TS together, without the risk of interference. As a result, the machine tool 1 can be made less expensive and more compact.

Additionally, the second tool gripping unit 643 is provided that moves in a range in which the gripped tool does not interfere with the arm support portion 63 even when the arm rotation shaft 641 rotates reciprocally, regardless of whether a normal tool TS or a long tool TL is gripped. Accordingly, an operation pattern in which interference is avoided can be set with ease. Then, if one of the attached tool T1 and the next attached tool T2 is a long tool TL and the other of the attached tool T1 and the next attached tool T2 is a normal tool TS, the operation pattern in which the long tool TL is gripped by the second tool gripping unit 643 is selected such that there is no risk of interference even if the long tool TL is gripped and rotated. Accordingly, interference between the long tool TL and the tool exchange device 6 can be reliably avoided.

Variations on the present embodiment will be described next. In the following descriptions, constituent elements having names identical to those of the constituent elements described thus far are assigned the same reference signs as those used thus far, and redundant descriptions thereof may be omitted.

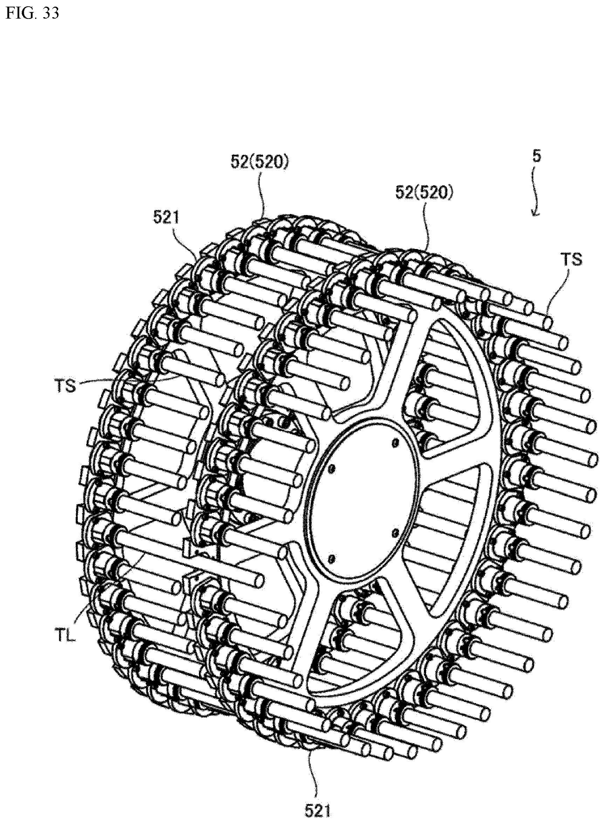

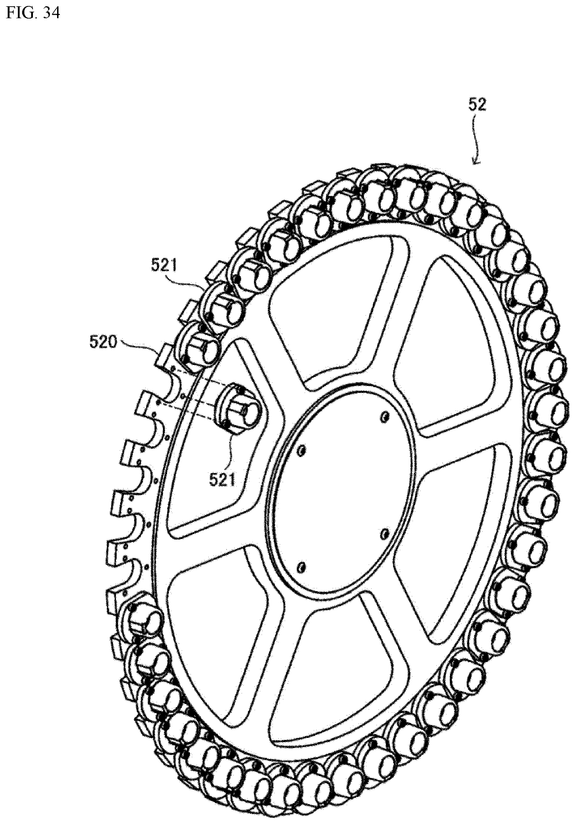

FIG. 33 is a perspective view illustrating the tool storage device 5 according to Variation 1. In FIG. 33, the support 51 and the magazine motor 53 are not illustrated. FIG. 34 is a perspective view illustrating the removal of the tool pot 521 from the tool magazine 52 illustrated in FIG. 33.

As illustrated in FIG. 34, in the tool storage device 5 of Variation 1, the tool magazine 52 differs from that of the foregoing embodiment in that a plurality of U-shaped notches are formed in a circumferential edge of the annular portion of the magazine body 520 of the tool magazine 52, so as to be recessed from the outer edge toward the center. The tool pots 521 are disposed in these notched portions, and are fixed to the magazine body 520 by screws. Accordingly, the tool pots 521 can be removed from the magazine body 520, and the notches can be exposed, by removing the screws. As illustrated in FIG. 33, in the tool storage device 5 according to Variation 1, the long tools TL can be stored in the first-stage tool magazine 52 by removing the tool pots 521 from the magazine body 520 in the second-stage tool magazine 52. Note that the same tool magazine 52 as that described in the foregoing embodiment, namely, without the notches, may be used for the first-stage tool magazine 52.

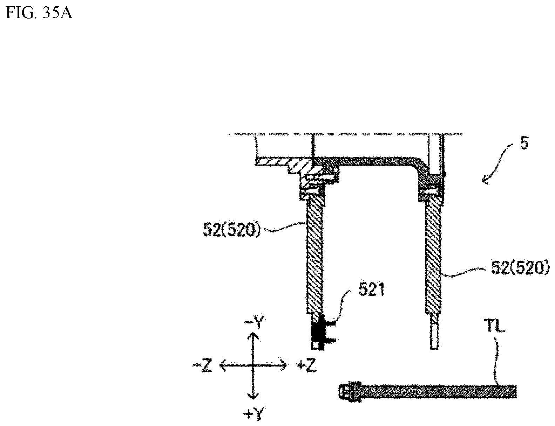

FIGS. 35A to 35C are cross-sectional views illustrating a state in which a long tool TL is stored in the first-stage tool magazine 52 in the machine tool 1 equipped with the tool storage device 5 illustrated in FIG. 33. In FIGS. 35A to 35C, the first-stage tool magazine 52 is illustrated on the left side of the figures, and the second-stage tool magazine 52 is illustrated on the right side of the figures.

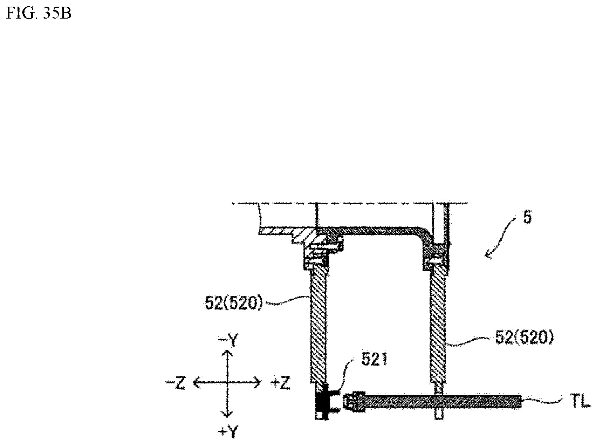

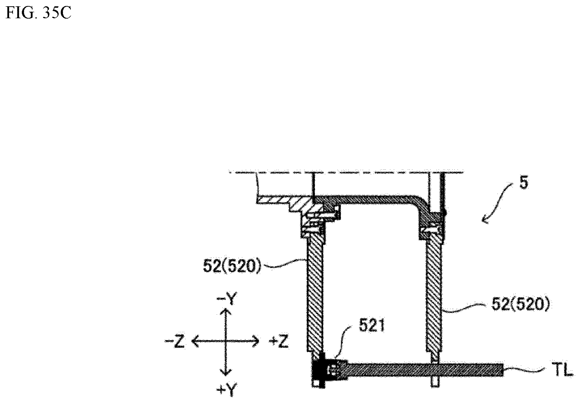

When storing the long tool TL in the tool storage device 5, the long tool TL is moved in the order of FIGS. 35A, 35B, and 35C, and stored in the tool storage device 5. FIG. 35A illustrates a state in which the long tool TL gripped by the tool exchange arm 64 (see FIGS. 2A and 2B) is in a position distanced in the +Y direction, slightly further in the +Z direction than the tool pots 521 in the first-stage tool magazine 52.

When the tool exchange arm 64 (see FIGS. 2A and 2B) gripping the long tool TL moves from this position in the -Y direction, the long tool TL is disposed in a position, with a slight distance in the Z-axis direction from the tool pot 521 of the tool magazine 52 located furthest on the +Y side, such that the shank of the long tool TL is opposite the tool pot 521, as illustrated in FIG. 35B. At this time, an intermediate portion or a tip side (the +Z direction side) portion of the long tool TL enters the U-shaped notch of the second-stage magazine body 520, and the annular portion of the magazine body 520 and the long tool TL therefore do not interfere with each other.

When the tool exchange arm 64 (see FIGS. 2A and 2B) moves in the -Z direction from the position illustrated in FIG. 35B, the shank of the long tool TL is inserted into the tool pot 521 of the tool magazine 52 positioned furthest on the +Y side, such that the long tool TL is stored in the tool magazine 52, as illustrated in FIG. 35C. Note that the long tool TL is moved in the order of FIGS. 35C, 35B, and 35A when the long tool TL is removed from the first-stage tool magazine 52.

In the machine tool 1 using the tool storage device 5 according to the foregoing embodiment, even if the tool pots 521 of the second-stage tool magazine 52 are removed, long tools TL will interfere with the annular portion of the magazine body 520 of the second-stage tool magazine 52, and long tools TL therefore could not be stored in the first-stage tool magazine 52. However, in addition to the effects of the foregoing embodiment, the machine tool 1 using the tool storage device 5 according to Variation 1 has the effect of reducing the space in the +Z direction of the tool storage device 5 by storing the long tools TL in the first-stage tool magazine 52, which makes the machine tool 1 more compact.

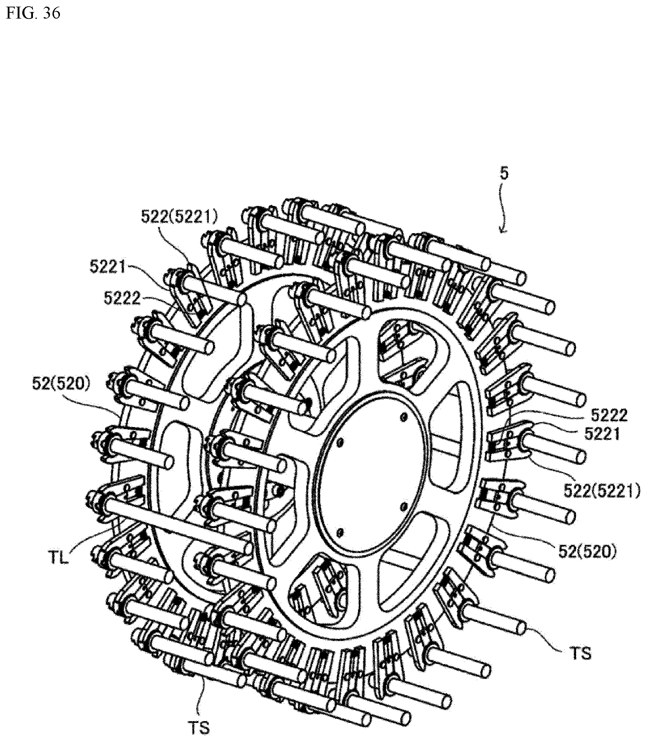

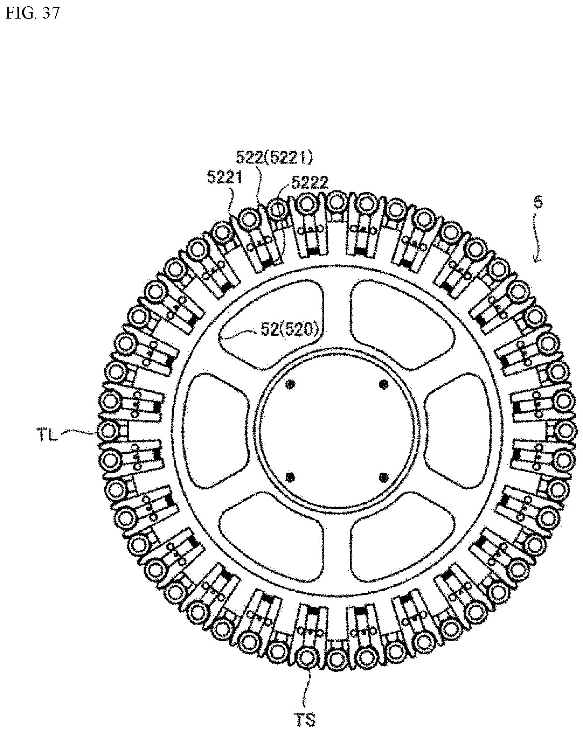

FIG. 36 is a perspective view illustrating the tool storage device 5 according to Variation 2. In FIG. 36, the support 51 and the magazine motor 53 are not illustrated. FIG. 37 is a right side view of the tool storage device 5 illustrated in FIG. 36.

As illustrated in FIGS. 36 and 37, the tool magazine 52 of Variation 2 differs from the tool magazine 52 of the foregoing embodiment in that a plurality of grips 522 are provided instead of the plurality of tool pots 521. In other words, the tool magazine 52 of the foregoing embodiment was a drum type provided with the tool pots 521, whereas the tool magazine 52 of Variation 2 is a grip type provided with the grips 522. Each grip 522 includes a pair of clamping pieces 5221 projecting in a radial direction and a clamping spring 5222. The pair of clamping pieces 5221 are attached to the magazine body 520 such that the clamping pieces 5221 displace in a direction in which projecting ends thereof approach and separate from each other.
The pair of clamping pieces 5221 are biased by the clamping spring 5222 in a direction in which the projecting ends approach each other, and when no external force is applied, the projecting ends of the pair of clamping pieces 5221 are kept at a predetermined interval. The grips 522 are arranged side-by-side in a circumferential direction (a rotation direction) with gaps provided between adjacent ones of the grips 522.

Additionally, the first-stage tool magazine 52 and the second-stage tool magazine 52 are linked in a position where the magazines are shifted from each other in the circumferential direction. As illustrated in FIG. 37, this position is a position in which the first-stage grips 522 and the second-stage grips 522 are arranged in an alternating manner in the circumferential direction when viewing the first-stage tool magazine 52 from the second-stage tool magazine 52 (in FIG. 37, in the Z-axis direction facing the diagram). In other words, in terms of the Z-axis direction, the first-stage tool magazine 52 and the second-stage tool magazine 52 are connected in an angular relationship in which the tools gripped by the grips 522 of the first-stage tool magazine 52 are located between adjacent ones of the grips 522 of the second-stage tool magazine 52.

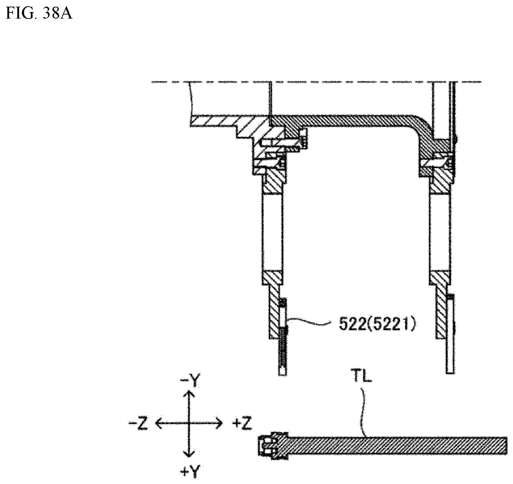

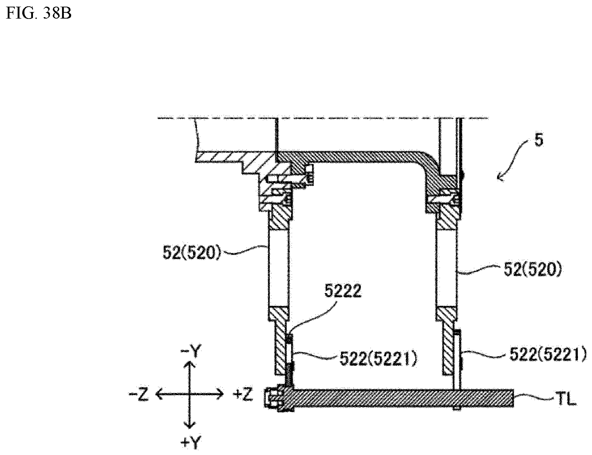

FIGS. 38A and 38B are cross-sectional views illustrating a state in which a long tool is stored in the first-stage tool magazine in the machine tool 1 equipped with the tool storage device 5 illustrated in FIG. 36. In FIGS. 38A and 38B, the first-stage tool magazine 52 is illustrated on the left side of the figure, and the second-stage tool magazine 52 is illustrated on the right side of the figure.

When storing the long tool TL in the tool storage device 5, the long tool TL is moved in the order of FIGS. 38A and 38B, and stored in the tool storage device 5. FIG. 38A illustrates a state in which the clamped portion, which is a portion clamped by the grip 522, of the long tool TL gripped by the tool exchange arm 64 (see FIGS. 2A and 2B), is in a position opposite from the first-stage tool magazine 52, in the Y-axis direction, distanced from the grip 522 in the first-stage tool magazine 52.

When the tool exchange arm 64 (see FIGS. 2A and 2B) gripping the long tool TL moves from this position in the -Y direction, the clamped portion of the long tool TL contacts the projecting ends of the grip 522 and pushes the projecting ends of the pair of clamping pieces 5221 apart against the biasing force of the clamping spring 5222, and the clamped portion of the long tool TL enters between the pair of clamping pieces 5221. Then, as illustrated in FIG. 38B, the clamped portion of the long tool TL is clamped by the grip 522, and the long tool TL is stored in the tool storage device 5. At this time, the intermediate portion or the tip side portion of the long tool TL enters between adjacent ones of the grips 522 of the second-stage tool magazine 52, and thus the second-stage tool magazine 52 and the long tool TL do not interfere with each other. Note that the long tool TL is moved in the order of FIGS. 38B and 38A when the long tool TL is removed from the first-stage tool magazine 52. Note also that the first-stage tool magazine 52 and the second-stage tool magazine 52 may be connected at the same angle without being shifted from each other in the circumferential direction. In this case, it is necessary to set the gaps between the projecting ends of each pair of clamping pieces 5221 such that the intermediate portion or the tip side portion of the long tool TL stored in the first-stage tool magazine 52 can enter between the pair of clamping pieces 5221 in the second-stage tool magazine 52.

Like the machine tool 1 using the tool storage device 5 according to Variation 1, in addition to the effects of the foregoing embodiment, the machine tool 1 equipped with the tool storage device 5 according to Variation 2 has the effect of reducing the space in the +Z direction of the tool storage device 5, which makes the machine tool 1 more compact.

The present invention is not limited to the embodiment described above, and may be modified in a variety of ways within the scope set forth in the aspects. For example, in the embodiment, an NC lathe having the tool storage device 5 and the tool exchange device 6 was described as an example of the machine tool 1, but the present invention may be applied to another machine tool having the tool storage device 5 and the tool exchange device 6, such as a machining center. Additionally, the machine tool 1 may include a guide bush for guiding the tip end part of the workpiece W gripped by the spindle 2 slidably in the Z1-axis direction. The machine tool 1 may also include a tool post on which a tool T such as a cutting tool is attached separately from the tool spindle 4. Note that the opposite spindle 3 may be omitted. Additionally, the embodiment described an example in which the Y-axis direction, the Y2-axis direction, and the Y3-axis direction, as well as the Z-axis direction, the Z1-axis direction, the Z2-axis direction, and the Z3-axis direction, respectively match, but these may be different directions.

Note that constituent elements included only in the descriptions of the variations described above may also be applied to other variations.

## Claims

1. A machine tool comprising:
a tool spindle to which a long tool having a length that is at least a predetermined length, and
a normal tool shorter than the predetermined length, can be interchangeably attached;
a tool storage device capable of storing both the long tool and the normal tool;
a tool exchange device having a first tool gripping unit and a second tool gripping unit, the tool exchange device configured to exchange the long tool or the normal tool stored in the tool storage device with an attached tool attached to the tool spindle; and
an exchange operation control unit configured to determine an operation pattern to be used in a tool exchange operation performed using the tool exchange device, on the basis of whether the attached tool is the long tool or the normal tool and whether a next attached tool to be attached to the tool spindle next is the long tool or the normal tool.

2. The machine tool according to claim 1,
wherein the tool exchange device includes an arm rotation shaft configured to rotate reciprocally in a predetermined angular range,
the first tool gripping unit is formed projecting from the arm rotation shaft in a radial direction of the arm rotation shaft, and is configured to move within a range in which even if the arm rotation shaft is rotated reciprocally while the normal tool is gripped, the normal tool gripped does not interfere with the tool exchange device, but when the arm rotation shaft is rotated while the long tool is gripped, the long tool gripped interferes with the tool exchange device, and
the second tool gripping unit is formed at a distance from the first tool gripping unit in a circumferential direction, projecting from the arm rotation shaft in a radial direction of the arm rotation shaft, and is configured to move within a range in which even if the arm rotation shaft is rotated reciprocally while the normal tool or the long tool is gripped, neither the normal tool gripped nor the long tool gripped interferes with the tool exchange device.

3. The machine tool according to claim 2,
wherein when one of the attached tool or the next attached tool is the long tool and the other of the attached tool or the next attached tool is the normal tool, the exchange operation control unit is configured to control the first tool gripping unit to grip the normal tool, and is configured to control the second tool gripping unit to grip the long tool.

4. The machine tool according to any one of claims 1 to 3,
wherein when the next attached tool and the attached tool are both the long tool, the exchange operation control unit is configured to control the second tool gripping unit to grip the attached tool and remove the attached tool from the tool spindle, and then control the first tool gripping unit to grip the next attached tool, remove the next attached tool from the tool storage device, and attach the next attached tool to the tool spindle before the second tool gripping unit stores the attached tool removed in the tool storage device.

5. A method for controlling a machine tool including a tool spindle to which a long tool having a length that is at least a predetermined length and a normal tool shorter than the predetermined length can be interchangeably attached, a tool storage device capable of storing both the long tool and the normal tool, and a tool exchange device configured to exchange the long tool or the normal tool stored in the tool storage device with an attached tool attached to the tool spindle, the method comprising:
a step of obtaining information as to whether the attached tool is the long tool or the normal tool and information as to whether a next attached tool to be attached to the tool spindle next is the long tool or the normal tool; and
a step of determining an operation pattern to be used in a tool exchange operation performed using the tool exchange device, on the basis of the information obtained in the step of obtaining information.
